(19) Europäisches Patentamt

European Patent Office

Office européen des brevets

(11) **EP 1 643 413 A2**

(12) **EUROPEAN PATENT APPLICATION**

(43) Date of publication:
05.04.2006 Bulletin 2006/14

(51) Int Cl.:
*G06K 7/08* (2006.01)

(21) Application number: **05250436.2**

(22) Date of filing: **27.01.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **30.09.2004 JP 2004289289**

(71) Applicants:
• **FUJITSU LIMITED**
**Kawasaki-shi,**
**Kanagawa 211-8588 (JP)**
• **Fujitsu Frontech Limited**
**Inagi-shi,**
**Tokyo 206-8555 (JP)**

(72) Inventors:
• **Ibi, Toshiaki, c/o Fujitsu Frontech Limited**
**Inagi-shi**
**Tokyo 206-8555 (JP)**

• **Sugimura, Yoshiyasu, c/o Fujitsu Frontech Limited**
**Inagi-shi**
**Tokyo 206-8555 (JP)**
• **Hashimoto, Shigeru, c/o Fujitsu Frontech Limited**
**Inagi-shi**
**Tokyo 206-8555 (JP)**
• **Ono, Takashi, c/o Fujitsu Frontech Limited**
**Inagi-shi**
**Tokyo 206-8555 (JP)**
• **Miyazawa, Hideo, c/o Fujitsu Frontech Limited**
**Inagi-shi**
**Tokyo 206-8555 (JP)**

(74) Representative: **Fenlon, Christine Lesley**
**Haseltine Lake,**
**Imperial House,**
**15-19 Kingsway**
**London WC2B 6UD (GB)**

(54) **Reader/writer and RFID system**

(57) A reader/writer includes two antennas that perform reading/writing of information from/to wireless tags that are moving. The antennas are positioned in such a manner that their communication ranges have an overlap along a route in which the wireless tag moves.

FIG.1

EP 1 643 413 A2

**Description**

The present invention relates to reading/writing processing of a moveable wireless tag.

In recent years, a technology called as RFID (Radio Frequency Identification) is drawing attention in a ubiquitous society, and the use of RFID systems is becoming widespread. For example, RFID tags are attached to commodities, and the commodities are managed by a reading information from or writing information in these tags.

The RFID is employed in variety of fields such as manufacturing, logistics and distribution, amusement, rental and leasing. The RFID systems are also in great demand for use on moving objects. The RFID systems are applied, for example, factories for manufacturing and logistics to manage the products or production materials being conveyed on a belt-type conveyer; or in airports to manage baggage. Moreover, RFID systems are widely applied to manage slowly moving objects such as pedestrians, and fast moving objects such as bicycles, automobiles, trains.

However, a reading/writing of a tag that is attached to a moving object is difficult as compared to a tag that is attached to an object which is motionless.

For motionless tags, it is possible to read information within the tag at several to 100 pieces of information per second. But for moving tags, the tags disappear from the readable area as a predetermined amount of time elapses (that is, moves to an unreadable position). In other words, the higher the moving speed of the tag becomes, the shorter the time for reading becomes, and the more difficult the reading/writing of the tag becomes.

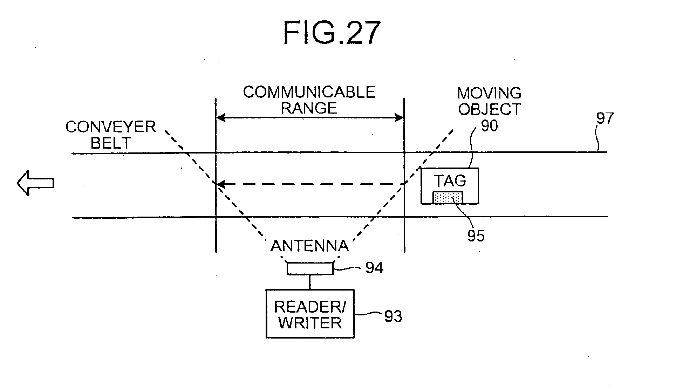

Fig. 27 is an explanatory diagram of a known RFID system. In this system, a moving object 90, which is to be monitored, is being conveyed in the direction of the arrow at a speed S with a conveyer belt 97. A tag 95 is attached to the moving object 90. Information such as the item name of the moving object 90, serial number and the like is written in the tag 95. A reader/writer 93 reads information from the tag 95 or writes information in the tag 95 to monitor the moving object 90. Precisely, the reader/writer 93 receives the information from the moving tag 95 or sends information to the moving tag 95 with the help of an antenna 94.

The reader/writer 93 must perform a reading/writing of information from/in the tag 95 during a communicable range (L), that is, the region in which the antenna 94 of the reader/writer 93 can receive/transmit radio waves from/to the tag 95.

For example, if the tag 95 moves at a speed of 3 m/s and the communication range is 1 meter, then the reader/writer 93 must perform a reading/writing of information from/in the tag 95 in about 333 milliseconds.

If the speed of the belt-type conveyer 97 is doubled to 6 m/s, to raise the operating efficiency of the production line, then the time during which the reader/writer 93 must perform a reading/writing of information from/in the tag 95 (hereinafter, "communication possible duration"), is shortened to about 167 milliseconds. If more information is to be read/written from/to the tag 95, then a longer communication possible duration becomes necessary. To lengthen the communication possible duration, the conveying speed of the tag must be lowered. However, lower conveying speed also means lower efficiency of the production line.

The communication possible duration can be represented as follows:

$$\text{communication possible duration} = L \text{ (m) } / \text{ S (m/sec)} \qquad (1)$$

In other words, the tag reading time is proportional to the distance between the tag and the reading device (that is, the range of the antenna of the reading device); and is inversely proportional to the speed of the tag (that is, the speed at which the tag passes through the range of the antenna of the reading device).

One approach to increase the communication possible duration is to use an antenna having a longer range. However, since the electro-magnetic field strength of a beam output from the antenna is generally in inverse proportion to the square of a distance between the tags, elongating the distance between the tag and the antenna adversely affects the communication distance in the direction perpendicular to the antenna.

Another approach is to use an antenna having a wider antenna-directivity (for example, 60 degree angle) in a horizontal direction. However, there are defects in this approach such as a deterioration of the communication distance in the vertical direction, and that the reading device becomes expensive as the antenna becomes larger. These defects become problems at the tag, which has a small antenna and miniscule electrical output.

If there are more than one tags in the communicable range, communication becomes difficult. One approach to identify the tags in the communicable range is to assign a unique address to each tag. One method of identifying each tag is a collision arbitration method. By the use of such an anti-collision method, although all the tags within the readable area can be identified, the position of each tag cannot be specified. In other words, it is not possible to determine which of the identified tags is upstream on the belt-type conveyer and which is downstream.

Further, when a plurality of tags are identified from within one readable range by use of the anti-collision method, there are instances in which the identified tag sequence and the actual sequence of the tags do not coincide with each other. It is for this reason that when reading (or writing) of each tag is performed in a random sequence after there is a recognition of the presence of a plurality of moving tags, the tags end up moving out of communication range while the tags are being read (or written onto). Due to this problem, development of a simply configured RFID system that efficiently reads information within a plurality of tags in now in progress.

A goods delivery system disclosed in Japanese Patent Application Laid-Open No. 2002-37425 manages a providing of an RFID on goods, a storing of the goods in a carrying case and moving of the carrying case, and a delivery of the goods using the information recorded in the RFID. There are antennas in the carrying cases that are individually stored and transported in a room which surrounds the goods with partitions, and also in the partitions in each room. In addition, the antennas provided in the partitions in each room are a plurality of small antennas, which are connected in a tandem row or in parallel rows to equalize radio field intensity.

Further, a transponder accessing method disclosed in Japanese Patent Application Laid-Open No. 2000-252855 uses an electromagnetic wave of a predetermined frequency at or below the medium frequency band as a question signal from a transponder reader to a plurality of transponders that transmit a response signal to the received electromagnetic wave. The interval between the time a plurality of transponders each receives a question signal is set at random within a predetermined distributed time. After the transponder reader transmits a question signal once, at least the sum of the aforementioned distributed time and the time required for sending one response signal is used for maintaining a receptive condition and to receive the response signal. Further, the transponder readers are arranged in mutually differing positions with two or more sending/receiving antennas, and the order of the sending/receiving antennas are switched and the sending of the question signal and the receiving of the response signal is performed.

The first known technology mentioned above has a plurality of antennas in the partitions of each room, and each antenna is connected in a tandem row or in parallel rows in order to equalize the radio field intensity. However, the permissible communication range between the tags and the antennas cannot be widened. Due to this limitation, the permissible communication time between the tag and the antennas cannot be extended, and there is a problem that tags cannot move at high speed. Moreover, since it is not possible to recognize the sequence of the moving tags, there is a problem that the speed of the tags must be set lower in order make it possible for the reading device and the tags to communicate.

On the other hand, the second conventional technology mentioned above reduces the probability of overlapping response signals from a plurality of transponders caused by a switching of sequence of two or more sending/receiving antennas positioned in differing positions. But the range of communication between the tags and the antennas cannot be widened. It is because of this limitation that the permissible communication time between the tags and the antennas cannot be lengthened, and this causes a problem of not being able to move the tags at high speed. Furthermore, it is not possible to recognize the sequence of moving tags when communicating with a plurality of tags. Thus, there is a problem of being forced to set the speed of tags lower in accordance with the permissible communication time between the reading device and the tags.

Preferred embodiments of the present invention seek to alleviate the above problems in the known technology.

A reader/writer for a wireless tag that moves, according to an embodiment of an aspect of the present invention, includes a plurality of antennas that receive a read signal from the wireless tag and transmit a write signal to the wireless tag, each antenna having a communication range, the antennas being positioned in such a manner that a communication range of any one of the antennas overlaps with a communication range of adjacent antenna along a route in which the wireless tag moves; and a signal processing unit that divides the write signal into a plurality of divisional write-signals, each divisional write-signal corresponding to each of the antennas, and combines the read signals which are received by the antennas into a combined read-signal.

A reader/writer for a wireless tag that moves, according to an embodiment of another aspect of the present invention, includes an antenna that receives a read signal from the wireless tag and that transmits a write signal to the wireless tag, the antenna having a communication range; and a controlling unit that controls an orientation of the antenna in such a manner that the wireless tag is in the communication range.

An RFID system for a plurality of wireless tags that move, according to an embodiment of a still another aspect of the present invention, includes a first reader/writer that includes a sequence information generating unit which receives identification information from each of the wireless tags and, based on the identification information, generates sequence information that represents a sequence in which the wireless tags move, and a second reader/writer that includes a communication unit which reads and writes information from and to the wireless tags based on the sequence information.

An RFID system for a plurality of wireless tags that move, according to an embodiment of still another aspect of the present invention, includes a plurality of reader/writers that receive wireless tag identification information from the wireless tags and write and read information to and from the wireless tags based on the identification information, the reader/writers being positioned with an intervening space therebetween, wherein the space is calculated based on a speed of movement of the wireless tags, a distance between adjacent wireless tags, and a communication range of each reader/writer.

The other features and advantages of preferred embodiments of the present invention are specifically set forth in or will become apparent from the following detailed description of the invention when read in conjunction with the accompanying drawings.

Fig. 1 is an explanatory diagram of an RFID system according to a first embodiment of the present invention;

Fig. 2 is a schematic of a configuration of the RFID system according to the first embodiment;

Fig. 3 is a block diagram of a configuration of a reader/writer according to the first embodiment;

Fig.4 is an explanatory diagram of transmission and reception performed by each antenna;

Fig. 5 is an exemplary diagram of an antenna according to the first embodiment;

Fig. 6 is a flowchart of a tag identification processing in an RFID system according to the first embodiment;

Fig. 7 is an exemplary diagram of a format of a tag identification command;

Fig. 8 is an exemplary diagram of a format of the address response;

Fig. 9 is a flowchart of an order of writing onto tags of an RFID system according to the first embodiment;

Fig. 10 is an exemplary diagram of a format of a write command;

Fig. 11 is an exemplary diagram a format of a response to a write command;

Fig. 12 is an explanatory diagram of the communication data transmitted and received by each antenna;

Fig. 13 is a diagram of a system configuration of an RFID system according to the second embodiment of the present invention;

Fig. 14 is a block diagram of a configuration of a reader/writer according to the second embodiment;

Fig. 15 is a flowchart of tag identification processing in an RFID system according to the second embodiment;

Fig. 16 is a diagram of a configuration of a reader/writer according to a third embodiment of the present invention;

Fig. 17 is a block diagram of a reader/writer that performs identification of tag movement sequence;

Fig. 18 is a block diagram of a configuration of a reader/writer that performs reading/writing of a tag;

Fig. 19 is a flowchart of a procedure to identify a tag movement sequence according to the third embodiment;

Fig. 20 is an explanatory diagram of alterations of tag managment information according to the third embodiment;

Fig. 21 is a flowchart showing a procedure for reading/writing to the tag according to the third embodiment;

Fig. 22 is a schematic of an RFID system configuration in which a beam width is altered;

Fig. 23 is a schematic of an RFID system configuration according to a fourth embodiment of the present invention;

Fig. 24 is a flowchart of a procedure to identify the sequence of moving tags according to the fourth embodiment;

Fig. 25 is a diagram of an RFID system configuration of according to the fifth embodiment;

Fig. 26 is an explanatory table of tags processed by each reader/writer; and

Fig. 27 is an explanatory diagram of a conventional RFID system.

DETAILED DESCRIPTION

Exemplary embodiments of the present invention are explained hereinafter with reference to the accompanying drawings. It is to be noted that the present invention is not limited to these embodiments.

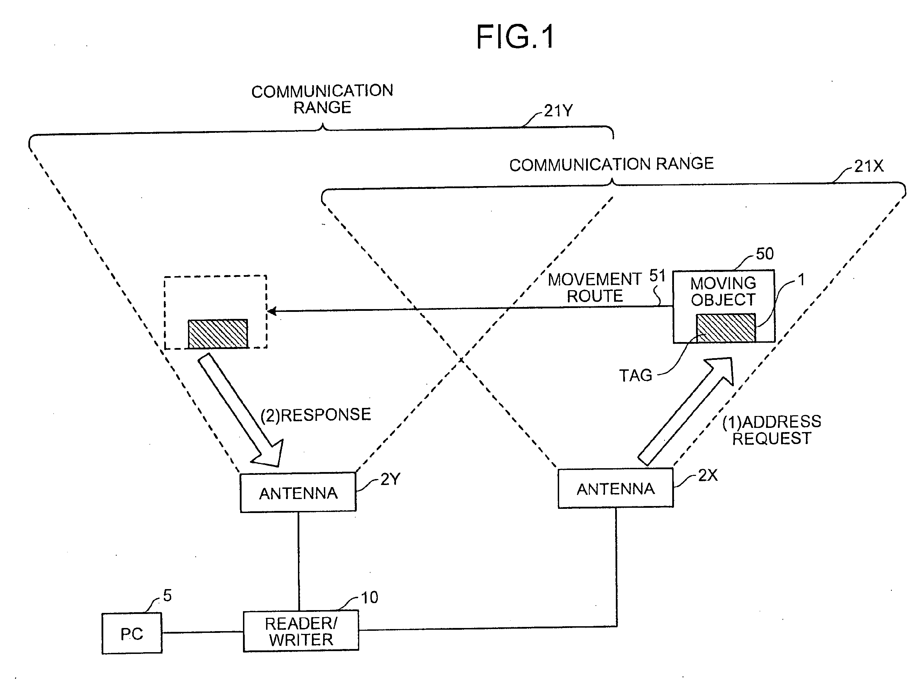

Fig. 1 is a schematic diagram for explaining the concept of the RFID system according to a first embodiment of the present invention. The RFID system includes a wireless tag 1, a plurality of antennas, although only two antennas are shown in the diagram, 2X and 2Y, a reader/writer 10, and a data processing unit, such as a personal computer (PC) 5.

The tag 1 is attached to a moving object 50. The moving object 50 is an object that is transported on a conveyer belt. Thus, the moving object 50 may be an article that is manufactured in a production line or an article that is distributed with the help of a conveyer belt.

The moving object may be air baggage in an airport.

The reader/writer 10 reads/writes information from/in the tag 1 via the antennas 2X and 2Y. Antennas 2X and 2Y are placed at predetermined positions along the movement route 51 of the moving object 50. The antennas 2X and 2Y are each placed at different positions, and they can communicate with the tag 1 within a predetermined area (communication ranges 21X, 21Y)). Further, the communication ranges 21X of the antennas 2X and 21Y of the antenna 2Y are partially superposed so that these antennas 2X and 2Y can simultaneously communicate with the same tag 1. In other words, the tag 1 can communicate with the reader/writer 10 within the communication ranges 21X and 21Y of the antennas 2X and 2Y, respectively.

The antennas 2X and 2Y transmit address request signals. The moving object 50 moves from right to left, along the arrow. When the tag 1 enters the communication range 21X of the antenna 2X, the tag 1 transmits its own address to the antenna 2X in response to an address request signal from the antenna 2X. Since the tag 1 is within the communication range 21X of the antenna 2X, only the antenna 2X receives the address from the tag 1.

When the moving object 50 moves in the communication ranges 21X and 21 Y of the antenna 2X and 2Y, the tag 1 receives address requests from both the antennas 2X and 2Y and sends its address to both the antennas 2X and 2Y. When the moving object 50 moves only in the communication range 21Y of the antenna 2Y, then the tag 1 receives an address request from antenna 2Y and sends its address to antenna 2Y. In other words, depending on the position of the tag 1, it can receive an address request signal from only the antenna 2X or 2Y, or from both the antennas 2X and 2Y.

When the tag 1 receives an address request from the antenna 2X or from 2Y, it sends out a response (transmission of response information) to the address request. The tag 1 transmits response information (address response and write response, explained later) to 2X and/or 2Y.

While the tag 1 is at a position within the communication range 21X of the antenna 2X, if the tag 1 can transmit all the response information to the antenna 2X, the antenna 2X can receive all the response information from the tag 1. Further, while the tag 1 is at a position within the communication range 21Y of the antenna 2Y, if the tag 1 can transmit all the response information to the antenna 2Y, the antenna 2Y can receive all the response information from the tag 1.

During the time in which the antenna 2X is receiving the response information from the tag 1, if the tag 1 moves out of the communication range 21X of the antenna 2X and into the communication range 21Y of the antenna 2Y, the antenna 2Y receives an address response from the tag 1. In other words, the antennas 2X and 2Y can both receive the response information depending on the position of the tag 1. For example, if the response information is of 12 bytes, the antenna 2X receives the data of 6 bytes from the tag 1, while the antenna 2Y receives the data of the other 6 bytes.

Thereafter, the reader/writer 10 receives the response information via the antennas 2X and 2Y, and transmits the received response information to the PC 5. The PC 5 controls the response information and the like when it is necessary. Further, the reader/writer 10 performs a predetermined writing and/or reading operation to the tag 1 via the antennas 2X and 2Y. This predetermined writing/reading operation is also carried out by the same procedure as that for the address request and the response information.

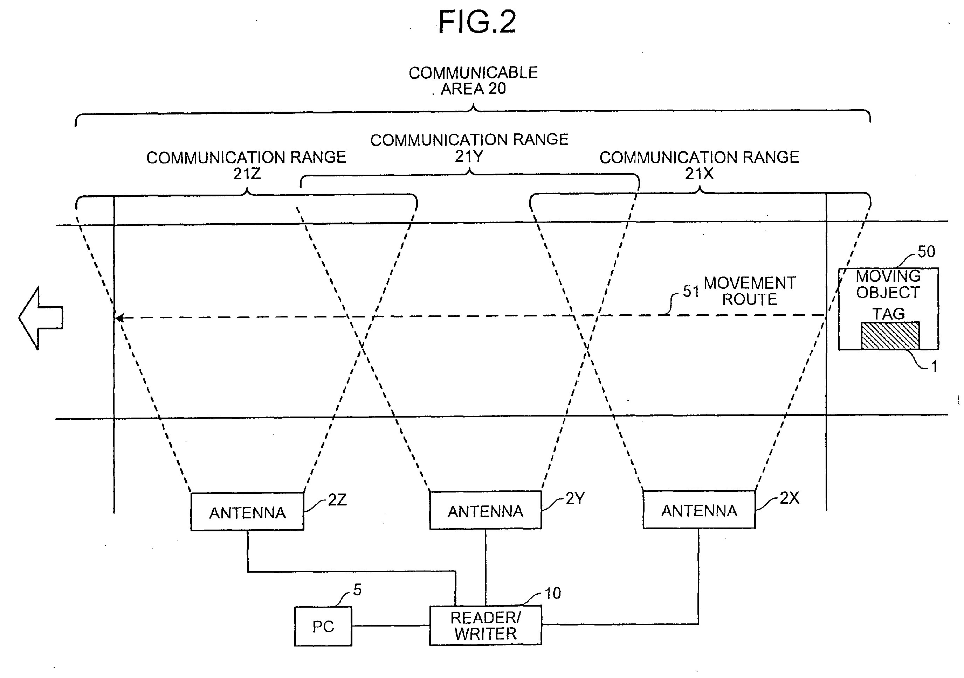

The following is an explanation of the system configuration of the RFID system according to the first embodiment. Fig. 2 is an illustration showing the system configuration of the RFID system according to the first embodiment. The RFID system includes the PC 5, the reader/writer 10, the antennas 2X and 2Y and an antenna 2Z, and the tag 1 attached to the moving object 50.

The PC 5 is connected to the reader/writer 10 via a LAN (Local Area Network) or the like, and the reader/writer 10 controls the information transmitted to and received from the tag 1. The moving object 50 is a product or the like monitored by the RFID system, and shifts its position along the movement route 51. The tag 1 is attached to the moving object 50 and stores information about the object 50. The tag 1 is read or written by the reader/writer 10 to obtain various types of information. The tag 1 generates electrical power from the received radio wave transmitted from the reader/writer 10, and it sends back predetermined response information to the reader/writer 10 (passive tag).

Antennas 2X to 2Z transmit information from the reader/writer 10 to the tag 1, and receive information from the tag 1 to the reader/writer 10. The antenna 2X transmits and receives information to and from the tag 1 within the communication range 21X, the antenna 2Y transmits and receives information to and from the tag 1 within the communication range 21Y, and the antenna 2Z transmits and receives information to and from the tag 1 within the communication range 21Z. The communication ranges 21X to 21Z compose together a communicable area 20 within which the reader/writer 10 can transmit information to and from the tag 1.

The reader/writer 10 uses the RFID system to write various information into the tag 1, and also reads various information from the tag 1 by the RFID system. The reader/writer 10 transmits and receives information to and from the tag 1 within the communication area 20.

Here, although the explanation has been given as to the case in which the reader/writer 10 and the antennas 2X to 2Z are separate units, it is also acceptable to assemble the antennas 2X to 2Z in the reader/writer 10. Similarly, although the reader/writer 10 and the PC 5 are shown as separate units, it is also acceptable to assemble the reader/writer 10 in the PC 5.

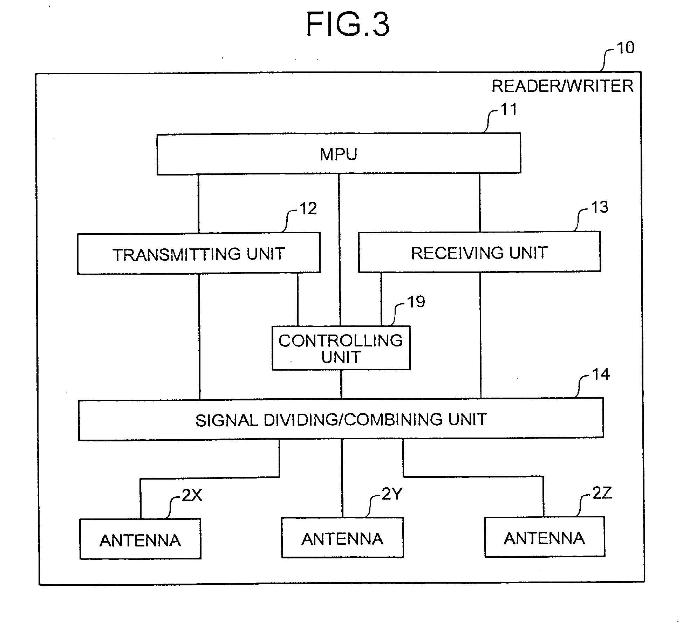

Fig. 3 is a block diagram of the reader/writer according to the first embodiment. The reader/writer 10 includes a Micro Processing Unit (MPU) 11, a transmitting unit 12, a receiving unit 13, a signal dividing/combining unit (signal processing unit) 14, the antennas 2X to 2Z, and a controlling unit 19.

The MPU 11 is a very small computing device for controlling the information to be read from and written into the tag 1 via the antennas 2X to 2Z, and transmits predetermined command information to the controlling unit 19 in accordance with the command information from the PC 5.

The transmitting unit 12 transmits predetermined information (a command) (communication data) to be written into the tag 1 on the basis of the command information from the controlling unit 19 by the RFID. The receiving unit 13 receives predetermined information from the tag 1 by the RFID.

The signal dividing/combining unit 14 divides predetermined information (signal) sent from the transmitting unit 12 to each of the antennas 2X to 2Z. The signal dividing/combining unit 14 further combines predetermined information received by the antennas 2X to 2Z (to form a hybrid signal) and sends to the receiving unit 13. The antennas 2X to 2Z each transmit and receive information to and from the tag 1. The controlling unit 19 controls the transmitting unit 12, the receiving unit 13, the signal dividing/combining unit 14, and the antennas 2X to 2Z, according to the command information from the MPU 11.

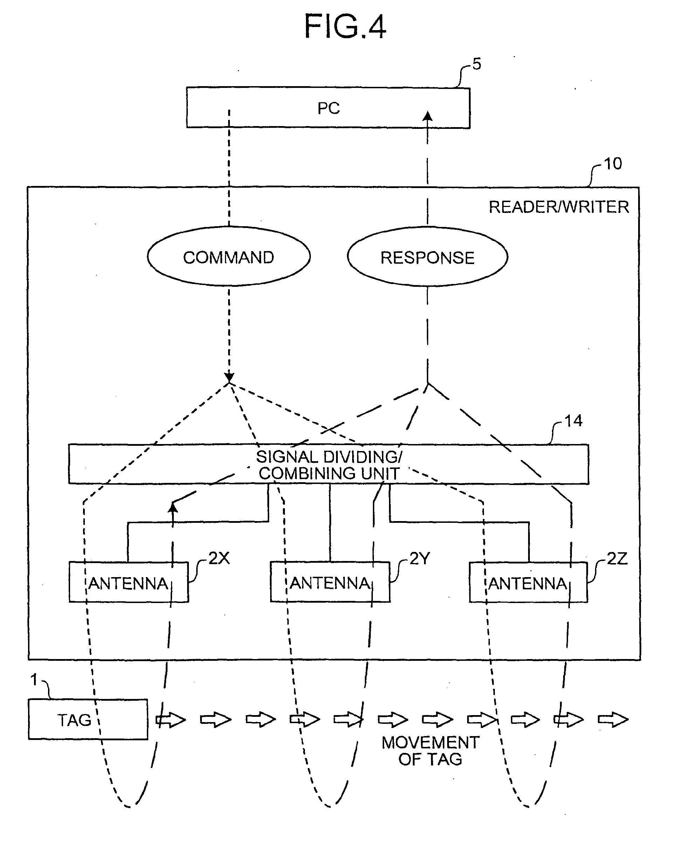

Fig. 4 is an explanatory view explaining the transmission and reception performed by each of the antennas 2X to 2Z. A command issued (sent) from the PC 5 to the controlling unit 19 is analyzed in the MPU 11 of the reader/writer 10, and thereafter the command is output from the transmitting unit 12 as an RF (Radio Frequency) signal.

This RF signal is split and sent to each of the antennas 2X to 2Z by the signal dividing/combining unit 14, and the same RF signals are sent from each of these antennas 2X to 2Z. These antennas 2X to 2Z are positioned so that the beams are superposed in a continuous manner without a gap between the beams with respect to the direction of the movement of the tag 1. In this way, the tag 1 moving within the range of the beam (signal) of these three antennas 2X to 2Z, that is, within the communication ranges 21X to 21Z, can receive the same RF signal without any interruption or gap while the moving object 50 is moving. Further, these three antennas 2X to 2Z can uninterruptedly receive the same RF signal from the tag 1 moving within the communication ranges 21X to 21Z.

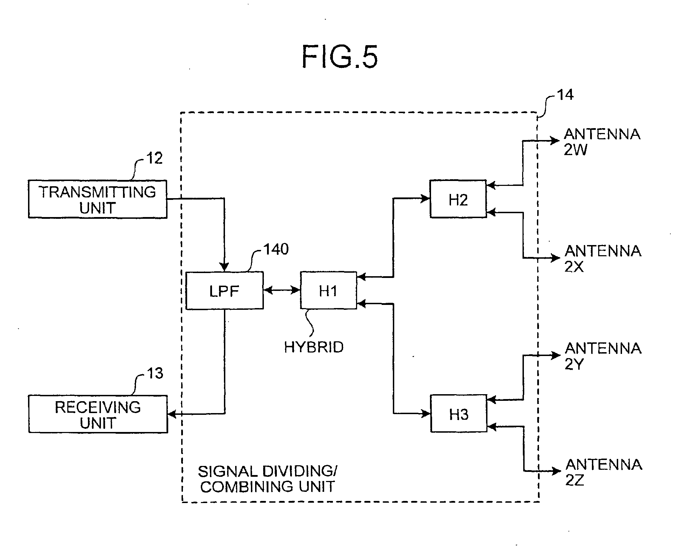

Fig. 5 is a schematic view for explaining transmission and reception by the antennas according to the first embodiment. For explanation purpose four antennas 2W to 2Z have been used. The signal dividing/combining unit 14 is equipped with a Low Pass Filter (LPF) 140, and three hybrid dividing/combining units (hereinafter, "hybrid") H1 to H3.

The LPF 140 is connected to the transmitting unit 12, the receiving unit 13, and the hybrid H1. Further, the hybrid H1 is connected to the other hybrids H2 and H3, and the hybrid H2 is further connected to two of the antennas 2W and 2X, while the hybrid H3 is connected to two of the antennas 2Y and 2Z.

The RF signal transmitted (input) from the transmitting unit 12 is sent to the hybrid H1 via the LPF 140. The hybrid H1 splits the received RF signal into two same RF signals, and sends one signal each to the hybrids H2 and H3. The hybrid H2 further divides the received RF signal into two of the same RF signal, and sends the divided signals to the antennas 2W and 2X. In the same manner, the hybrid H3 divides the received RF signal into two RF signals, and sends one signal each to the antennas 2Y and 2Z.

The signals received by the antennas 2W and 2X are processed by an OR operation by the hybrid H2 and sent to the hybrid H1 as one RF signal, while the signals received by the antennas 2Y and 2Z are processed by the OR operation by the hybrid H3 and sent to the hybrid H1 as one RF signal.

The signals received by the hybrids H2 and H3 are processed by the OR operation by the hybrid H 1 and sent to the LPF 140 as one RF signal; and the LPF 140, in turn, sends this RF signal to the receiving unit 13. By this operation, as long as the tag 1 is within the range of four antenna beams (within the communication range), the reader/writer 10 can receive a response signal from the moving tag 1.

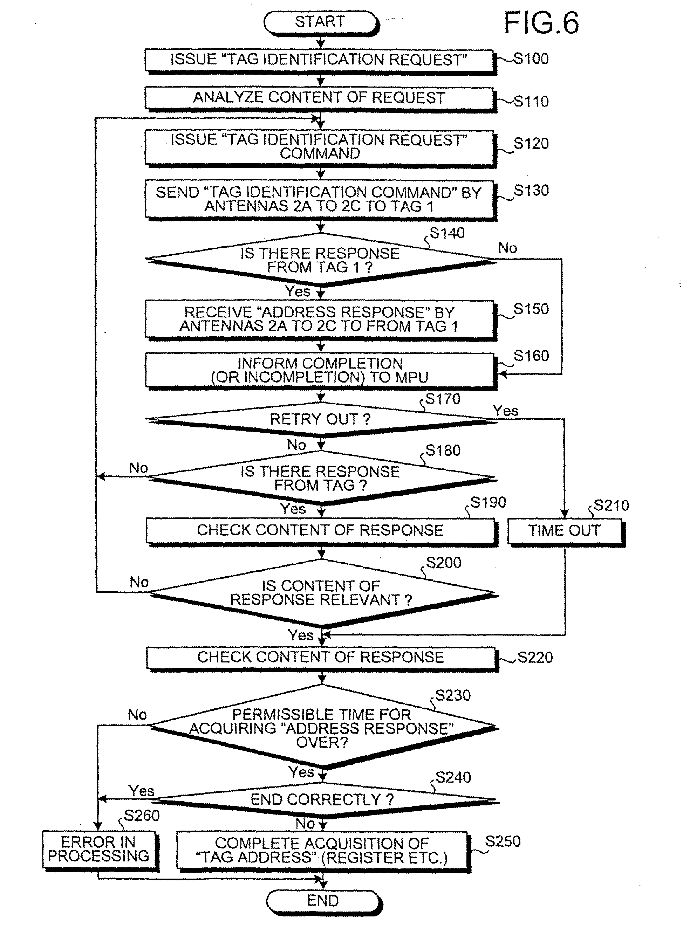

Next, the process carried out by the RFID system is now explained. Here, as one example of the process carried out by the RFID system, an explanation is first given about the case in which a tag identifying process with respect to the moving tag 1 is performed (acquisition of an address of the tag 1) and thereafter a writing into the tag 1 (tag writing process) is carried out. Fig. 6 is a flowchart of a process procedure for identifying each tag in the RFID system according to the first embodiment.

First, the PC 5 issues a "tag identification request" to the reader/writer 10 as command information for identifying the tag 1 (step S100). The MPU 11 of the reader/writer 10 gives an analysis to the contents of the "tag identification request" from the PC 5 (step S110), and issues in turn a "tag identification request" command to the controlling unit 19 (step S120).

The controlling unit 19 commands the transmitting unit 12 to transmit a series of bit trains as a "tag identification command" over the air as a command for obtaining the address of the tag 1. The "tag identification command" is sent out to the communication ranges 21X to 21Z (permissible communication area 20) via the signal dividing/combining unit 14 and the antennas 2X to 2Z (step S130). When the tag 1 receives the "tag identification command" from the reader/ writer 10, it sends out an "address response" as a response signal.

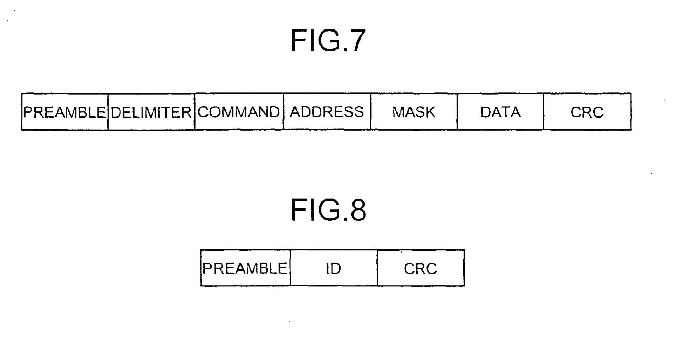

Fig. 7 is an illustration of an example of a format of the "tag identification command"; and Fig. 8 is an illustration of an example of a format of the "address response". As illustrated in Fig. 7, the tag identification command is composed of a plurality of fields, including the field of "preamble", "delimiter, "command", "address", "mask", "data" and that of "CRC" (Cyclic Redundancy Check).

The "preamble" is a field for carrying out synchronization at the tag 1 side, and indicates a predetermined fixed pattern. The "delimiter" is a parameter for deciding the transmission mode (communication speed and the like) between the tag 1 and the reader/writer 10.

The "command" is a command code showing the identifying process (acquisition of address) of the tag 1; and the "address" is a field for indicating the head address of the comparison information used for group identification of the tag 1. Based on the result of a comparison between the information of the "address" field (8 bytes) and that of the "data" field (8 bytes), a selection can be made whether to allow the tag 1 to respond.

The "mask" is a mask for comparison when conducting a group identification of the tag 1. For example, if the value of the mask filed is "0", then all the tags are subject to group identification. The "data" is a field for indicating the comparison information when the group identification of the tag 1 is conducted. On the basis of the result of the comparison between 8-byte information about the "data" field and 8-byte information about the above-mentioned "address" field, a selection can be made whether the tag 1 should be made to respond. The "CRC" field is a check code for transmission data (tag identification command).

The size of each field is arranged such that the "preamble" is 10 bits, the "delimiter" is 1 byte, the "command" is 1 byte, the "address" is 1 byte, the "mask" is 1 byte, the "data" is 8 bytes and the "CRC" is 2 bytes. Accordingly, the total size of the "tag identification command" is, for example, about 16 bytes.

As illustrated in Fig. 8, the "address response" is composed of a plurality of fields, including the fields of "preamble", "ID" and "CRC". The "preamble" here is a predetermined fixed pattern for carrying out synchronization at the reader/writer 10. The "ID" is a field for indicating the 8-byte fixed address information of the tag 1. Further, the "CRC" is a check code for checking the response data (address response).

The size of each field is arranged so that the "preamble" is 10 bits, the "ID" is 8 bytes, and the "CRC" is 2 bytes. Accordingly, the total size of the "address response" is, for example, about 12 bytes. The "tag identification command" and the "address response" can be transmitted and/or received at, for example, 10 kilobits per second. The MPU 11 checks whether the "address response" from the tag 1 has been received (whether there is a response from the tag 1) (step S140). After the "tag identification command is transmitted from the reader/writer 10, if the tag 1 has transmitted the "address response" (step S140: yes), the reader/writer 10 receives this "address response" by its receiving unit 13 (step S150). Here, the receiving unit 13 receives the "address response" via the antennas 2X to 2Z and the signal dividing/combining unit 14. In other words, according to the first embodiment, the tag 1 receives a "tag identification command" from the antennas 2X to 2Z, and transmits an "address response" to the same antennas 2X to 2Z.

When the controlling unit 19 of the reader/writer 10 receives the "address response" from the tag 1 within a predetermined time period after the controlling unit 19 had transmitted the "tag identification command", the controlling unit 19 informs the MPU 11 that the address identification of the tag 1 is now completed (step S160). On the other hand, if the controlling unit 19 of the reader/writer 10 does not receive the "address response" from the tag 1 within a predetermined time period after the controlling unit 19 had transmitted the "tag identification command" (step S140: no), then the controlling unit 19 informs the MPU 11 that the address identification of the tag 1 has not been detected (step S160).

In a case in a which an abnormality of "CRC" or the like has been found, or in a case in which no "address response" has been detected, then the MPU 11 sends a request to the controlling unit 19 so that it sends (retries) a transmission request of the "tag identification command" again.

The tag 1, which is an accessible object, is moving continuously; and due to this movement, a selection whether to permit/reject or the permissible number of retries to transmit the "tag identification command" performed by the reader/writer 10 should be set in advance at the reader/writer 10on the basis of the permissible communication range with the tag 1, the speed of the tag 1, and the maximum amount of data to be transmitted to and/or received from the tag 1.

The MPU 11 of the reader/writer 10 checks whether the number of retries to transmit the "tag identification command" exceeds a predetermined number, for example 10 times (step S170). Here, if the MPU 11 has determined that the number of retries to transmit the "tag identification command" has not been exceeded yet (step S170: no); then, it is checked as to whether or not the transmitting unit 12 has received the "address response" (step S180).

At this stage, if the receiving unit 13 has received the "address response" from the tag 1, then, the MPU 11 checks the relevance of the thus received "address response" (steps S190, S200). The relevance of the "address response" from the tag 1 is carried out by checking the existence of, for example, a CRC error, coding error, preamble error and the like.

When the MPU 11 has determined that the content of the "address response" is relevant (not abnormal) (step S200: yes), the MPU 11 sends the "address response" received by the receiving unit 13 to the PC 5. On the other hand, when no "address response" has been detected (step S180: no), or when an abnormality, such as a CRC error, has been detected in the contents of the "address response" (step S200: no), the MPU 11 sends a request to the controlling unit 19 to re-send the "tag identification command" (step S120).

When the controlling unit 19 receives the request from the MPU 11 to retry the transmission of the "tag identification command", the controlling unit 19 carries out the transmission of the "tag identification command" and the reception of the "address response" by repeating steps S130 to S160.

The reader/writer 10 checks, by its MPU 11, whether or not the number of retries to transmit the "tag identification command" exceeds a predetermined set number (step S170). Here, the repetitive number of the retry of transmission of the "tag identification command" has exceeded the predetermined permissible number, then the MPU 11 determines that the tag 1 has gone out of the communicable area 20(occurrence of read skipping), and informs the PC 5 that a time-out has occurred (step S210).

The PC 5 receives the "address response" from the reader/writer 10, and checks the content of the "address response" (step S220). If the PC 5 receives this "address response" from the tag 1 correctly within a predetermined time (steps S230 to S250), then the reader/writer 10 carries out the information writing operation to the tag 1 using the acquired address of the tag 1. On the other hand, if an occurrence of abnormality such as the time-out phenomenon in step S210 is observed, then the reader/writer 10 determines that a "processing error" has occurred, and does not carry out the writing operation.

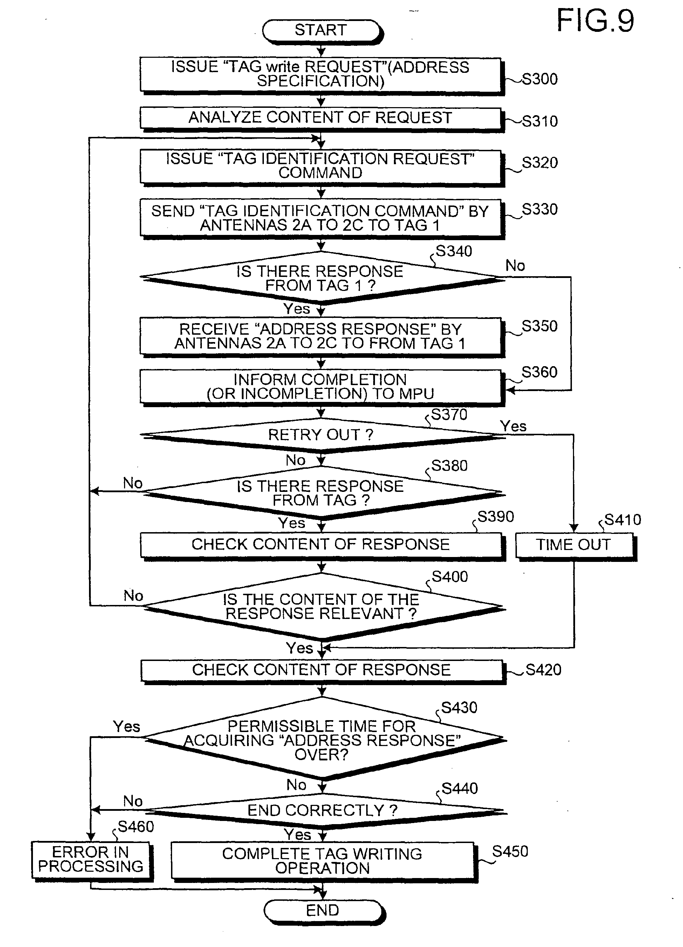

Fig. 9 is a flowchart of a process procedure for writing into a tag using an RFID system according to the first embodiment. The tag writing procedure by the RFID system is carried out in the same way as the tag identification procedure. That is, the PC 5 issues a "tag write request" specifying the address of the tag 1 to the reader/writer 10 as an instruction to write into the tag 1 (step S300).

The MPU 11 of the reader/writer 10 issues a "tag write request" command for writing information to the tag 1 to the controlling unit 19, after giving an analysis of the content of the "tag write request" from the PC 5 (step S31 0).

The controlling unit 19 commands the transmitting unit 12 to transmit a series of bit trains as a "write command" over the air as a command to write information into the tag 1. The "tag write command" is sent out to the communication ranges 21X to 21Z (permissible communication areas 20) via the signal dividing/combining unit 14 and the antennas 2X to 2Z (step S330).

When the tag 1 receives the "write command" from the antennas 2X to 2Z of the reader/writer 10, it writes information corresponding to the "write command", and thereafter the tag 1 sends a "write response", that indicates the completion of the writing operation, to the antennas 2X to 2Z.

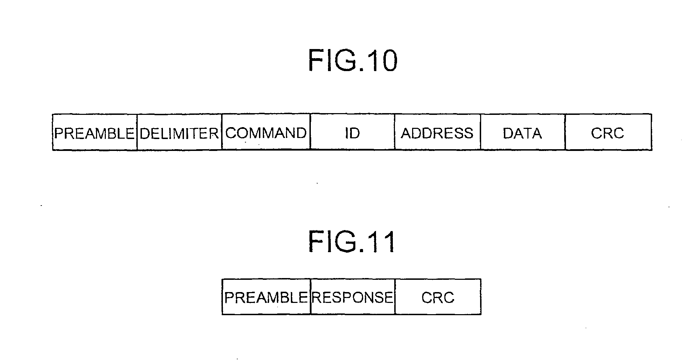

Fig. 10 is an illustration showing one example of a format of the "write command"; and Fig. 11 is an illustration showing one example of a format of the "write response". As shown in Fig. 10, the "write command" is composed of a plurality of fields, such as the field of "preamble", "delimiter", "command", "ID", "address", "data", and "CRC" (Cyclic Redundancy Check).

The "command" here is a command code showing the information writing process to the tag 1, and the "address" is a field for indicating the head address when data is written into the tag 1. The "data" here is a write data (fixed at 4 bytes) for writing into the tag 1, and the "CRC" here is a check code with respect to the transmission data (write command).

The size of the field is arranged such that the "preamble" is 10 bits, the "delimiter" is 1 byte, the "command" is 1 byte, the "address" is 1 byte, the "data" is 4 bytes and the "CRC" is 2 bytes. Consequently, the total size of the "write command" is, for example, about 19 bytes.

The "preamble" here is a predetermined fixed pattern for carrying out synchronization at the reader writer 10. The "response" shows a result of the write operation. The "CRC" here is a check code for the response data (write response).

If, for example, the "preamble" is 10 bits, the "response" is 1 byte, and the "CRC" is 2 bytes. That is, the "write response" is about 5-bytes. The "write command" and the "write response" can be transmitted and/or received at, for example, 10 kilobits per second.

The MPU 11 checks whether the "write response" from the tag 1 was received (step S340). After the "write command" is transmitted from the reader/writer 10, if the tag 1 transmits the "write response" (step S340: yes), the reader/writer 10 receives this "write response" using its receiving unit 13 (step S350). Here, the receiving unit 13 receives the "write response" via the antennas 2X to 2Z and the signal dividing/combining unit 14. In other words, according to the first embodiment, the tag 1 receives a "write command" from the antennas 2X to 2Z, and transmits a "write response" to the same antennas 2X to 2Z.

When the controlling unit 19 of the reader/writer 19 receives the "write response" from the tag 1 within a predetermined time period after it has transmitted the "write command", the controlling unit 19 informs the MPU 11 that write operation to the tag 1 is now completed (step S360). On the other hand, if the controlling unit 19 of the reader/ writer 10 does not receive the "write response" from the tag 1 within a predetermined time after it had transmitted the "write command" (step S340: no), then it informs the MPU 11 that the write operation to the tag 1 has not been completed (step S360). Since retrying of the writing operation to the tag 1 is carried out thereafter in accordance with a procedure that is similar to that performed for the tag identification shown in Fig. 5, the explanation thereabout is omitted.

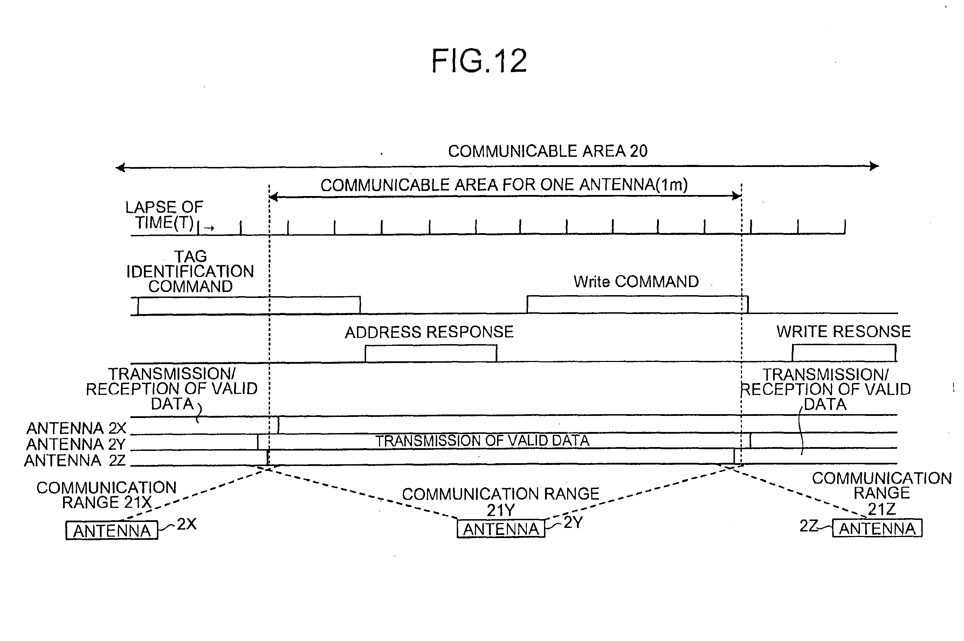

Here, an explanation is now given about the relation between the communication data ("tag identification command", "address response", "write command", and "write response") and the time spent for transmission/reception of the communication data between the antennas 2X to 2Z and the tag 1; which corresponds to the procedure carried out in steps S130 to S150, and also in steps S330 to S350. Fig. 12 is an explanatory diagram of the communication data transmitted and received by each antenna. In Fig. 12, the transverse axis indicates time upon which the communication data, such as the commands sent from the reader/writer 10 ("tag identification command" and "write command"), and the commands sent from the tag 1 ("address response" and "write response") are shown on timelines. It should be noted that the time progresses from left to right in this figure.

In the lower part of Fig. 12, variations in the transmission/reception at each of the antennas 2X to 2Z are illustrated in accordance with the passage of time. In other words, the antenna 2X carries out transmission and reception of the valid data to and from the tag 1 within the communication range 21X, the antenna 2Y carries out transmission and reception of the valid data to and from the tag 1 within the communication range 21Y, and the antenna 2Z carries out transmission and reception of the valid data to and from the tag 1 within the communication range 21Z. The tag 1 moves towards the range of antenna 2Z via the ranges of antennas 2X and 2Y.

The flow of commands from the reader/writer 10 and the response information from the tag 1 are explained in the flowcharts in Figs. 6 and 9. First, the "tag identification command" is transmitted from the reader/writer 10 to the tag 1, and then the "address response" is transmitted from the tag 1 to the reader/writer 10. The "write command" is transmitted from the reader/writer 10 to the tag 1, and then the "write response" is transmitted from the tag 1 to the reader/writer 10.

The tag 1 consecutively communicates with the antenna 2X within the communication range 21X, with the antenna 2Y within the communication range 21Y, and with the antenna 2Z within the communication range 21Z. The communication ranges 21X of the antenna 2X and 21Y of the antenna 2Y are partially overlapping, and those 21 Y of the antenna 2Y and 21Z of the antenna 2Z are also partially overlapping. That is, the antennas 2X to 2Z are disposed in such a manner that the communication ranges 21X to 21Z of each of those antennas are made continuous along the route 51 of the tag 1. Thus, the tag 1 communicates with both the antennas 2X ad 2Y within the communication range where 21X and 21Y are overlapping, and communicates with both the antennas 2Y and 2Z within the communication range where 21Y and 21Z are overlapping.

By this configuration, the tag 1 communicates uninterruptedly with the reader/writer 10 within the permissible communication area 20. In other words, even if the transmission and/or reception of one command packet (command sequence) spans over a plurality of antenna communication ranges, communication between the tag 1 and the reader/ writer 10 is continuously carried out, regardless of a changeover of the antennas from one to another between 2X to 2Z, and regardless of a delimiter of the command/data packet and the sequence.

For example, when in a case in which the moving speed of the belt-type conveyer for conveying the tag 1 (moving object 50) is 3 meters per second, and the permissible communication range L of one of those antennas is 1 meter, then the permissible time for communication between the antenna and the tag1 will be 1/3 seconds (about 333 milliseconds).

If the data transmission speed of a command or a response between the tag 1 and the reader/writer 10 is set to 10 kilobits per second (about 1 byte/0.8 millisecond), the required time for processing each of the following operations will be as shown below.

(1) time required for composing an identification command in the MPU 11 will be approximately 0.5 millisecond (not shown).
(2) time required for transmission of the "tag identification command" from the transmitting unit 12 to the tag 1 (about 16 bytes) will be approximately 13 milliseconds.
(3) time required for carrying out a process within the tag 1 will be approximately 0.5 milliseconds (not shown).
(4) time required for transmission of the "address command" from the tag 1 to the reader/writer 10 (about 12 bytes) will be approximately 10 milliseconds.
(5) time required for carrying put a process within the MPU 11 will be about 0.5 milliseconds (not shown).
(6) time required for transmission of the "write command" from the MPU 11 to the tag 1 (approx. 19 bytes) will be approximately 16 milliseconds.
(7) time required for carrying out a process within the tag 1 will be approximately 0.5 milliseconds (not shown).
(8) time required for transmission of the "write response" from the tag 1 to the reader/writer 10 (approx. 5 bytes) will be approximately 4 milliseconds.

The time required for going through all the above-mentioned processes is approximately 45 milliseconds, so that 333 milliseconds of the communication time obtainable within the communicable area of one antenna is sufficient, and can cope with an increase in the time required for carrying out the retry operation due to a data destruction caused by a noise during the communication, or with an increase in the amount of communication data.

Now, an explanation is given about the case in which the speed of the belt-type conveyer is raised to 30 meters per second for obtaining a better operability in the RFID system. In this case, the permissible communication time between the tag 1 and the reader/writer 10 will be 33.3 milliseconds which is 1/10 of 333 milliseconds. Thus, the permissible communication time between the tag 1 and the reader/writer 10 will be shorter than the time (45 milliseconds) which is required for going through a series of processes (1) to (8).

However, even in this case, if the RFID system contains 3 consecutively located antennas 2X to 2Z, the reader/ writer 10 can obtain a permissible communication time of about 100 milliseconds (= 33.3 milliseconds x 3), which is three times longer than in the case where only one antenna is disposed.

This permissible communication time period of 100 milliseconds is sufficient compared with the time required for carrying out a series of the processes (1) to (8) (45 milliseconds), and is also sufficient for coping with the case of a retry or retries which is conducted when there is an abnormal state or an increase in the amount of communication data.

For example, when the antenna 2X is starting to receive the "tag identification command" from the reader/writer 10. In this case, the antenna 2X receives, for example, the "preamble" from the "tag identification command".

When the tag 1 moves from the communication range 21X to the area between the communication range 21X and the communication range 21Y, the "tag identification command" is received by both of the antennas 2X and 2Y. The antennas 2X and 2Y receive the "address" from the "tag identification command".

When the tag 1 moves from the area between the communication range 21X and the communication range 21Y to the communication range 21 Y, the "tag identification command" is received by the antenna 2Y. The antenna 2Y receives the fields of the "mask" up to the "CRC" from the "tag identification command".

When the tag 1 transmits the "address response" during the time it is within the communication range 21Y, the antenna 2Y receives this "address response". In this case, the antenna 2Y receives, for example, the field of the "preamble" up to the "CRC" from the "address response".

When the "write command" is transmitted from the reader/writer 10 during the time in which the tag 1 is within the communication range 21Y, then the "write command" starts being received by the antenna 2Y. In this case, the antenna 2Y receives, for example, the fields of the "preamble" up to the "address" from the "write command". When the tag 1 moves from the communication range 21Y to the area between the communication range 21Y and the communication range 21 Z, the "write command" is received by both of the antennas 2Y and 2Z. The "data" of the "write command" is, for example, received by these antennas 2Y and 2Z.

When the tag 1 moves from the area between the communication range 21Y and the communication range 21Z to the communication range 21Z, the "write command" is received by the antenna 2Z. In this case, the antenna 2Z receives, for example, the field of the "CRC" from the "write command".

When the "write response" is transmitted from the tag 1 during the time in which the tag 1 is within the communication range 21Z, then the "write response" is received by the antenna 2Z. In this case, the antenna 2Z receives, for example, all the fields from the "preamble" up to the "CRC" from the "write response".

In this manner, since the reader/writer 10 is equipped with a plurality of antennas 2X to 2Z, the reader/writer 10 can extend the range of communication with the tag 1, and the continuity of communication without any interruption of the data communication route can be assured even when the tag 1 moves in the area between the antennas 2X to 2Z (communication range 21X to 21 Z).

It should be noted that this first embodiment has the reader/writer 10 and three antennas 2X to 2Z, but the reader/writer 10 can be accompanied by two antennas, or four or more antennas.

In the first embodiment, the tag 1 moves on the belt-type conveyor in a linear manner, but the movement of the tag 1 is not limited to a linear route. That is, if the route 51 of the tag 1 includes a curved line, the antennas 2X to 2Z are positioned in accordance with the route 51 of the tag 1. In this case, the antennas 2X to 2Z are positioned in such a manner that the communication ranges 21X to 21Z are superimposed on the route 51 containing the curve line.

Further, although it has been explained that the tag 1 moves on a flat face of the conveyer, the movement of the tag 1 is not limited to movement on a flat face. That is, even if the route 51 of the tag 1 includes a route of three dimensions, the antennas 2X to 2Z are positioned in accordance with the route 51 of the tag 1. In this case, the antennas 2X to 2Z are positioned in such a manner that the communication ranges 21X to 21Z are superimposed on the route of three dimensions.

As explained above, according to the first embodiment, the permissible communication area 20 is widened by having a plurality of the antennas 2X to 2Z, and the continuity of the communication route within the permissible communication area 20 can be assured. Thus, the time for carrying out data communication between the tag 1 and the reader/writer 10 can be extended, so that the communication between the tag 1 moving at high speed and these antennas can be performed and transmission/reception of a large amount of data between the tag 1 and the reader/writer 10 can also be assured.

Further, according to the first embodiment, it is possible to extend the reading space of information contained in the tag 1 without changing the transmitting ability, by disposing a plurality of antennas 2X to 2Z. Due to this, it is also possible to raise the speed of the moving object 50 (and thus, of the belt-type conveyer) without changing the conditions for communication between the reader/writer 10 and the tag 1, such as the communication speed, communication protocol, and the like, sot that the tag identification by the reader/writer 10 and reading/writing to the tag 1 can be efficiently performed.

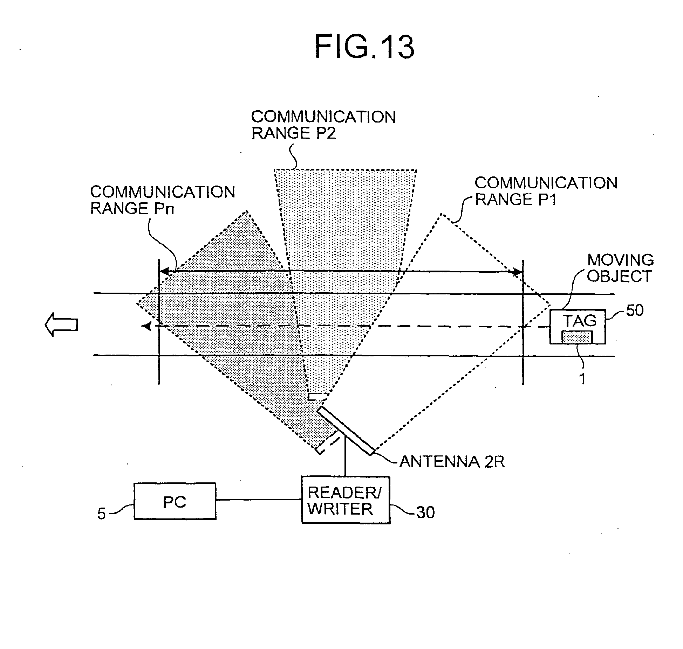

Next, a second embodiment of the present invention is now explained with reference to Figs. 13 to 15.

In this second embodiment, the communication range of an antenna is extended by rotating the antenna of the reader/writer 10 or driving it in a similar way. The antenna is rotated in such a manner that the communication range of the antenna follows the movement of the moving object 50.

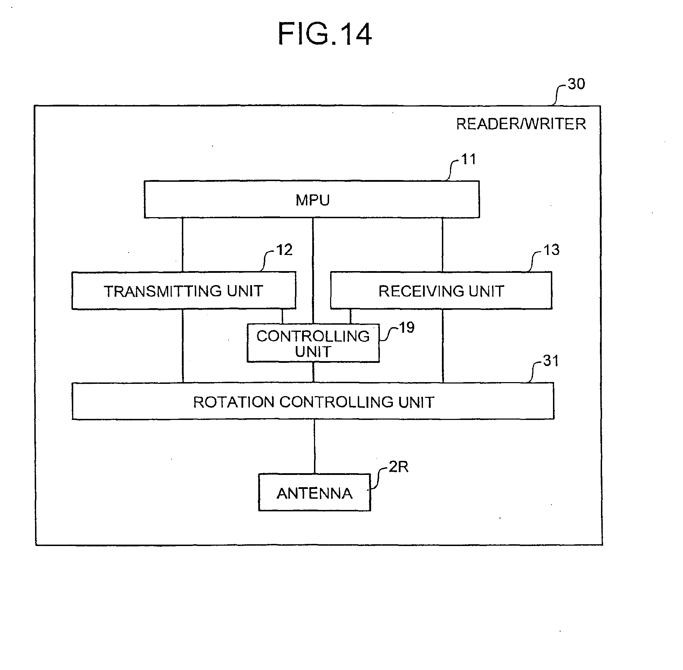

Fig. 13 is a schematic for explaining the concept of an RFID system according to the second embodiment; and Fig. 14 is a block diagram of the reader/writer according to the second embodiment. Among the constituent members in these Figs. 13 and 14, the members having the same functions as those of the RFID system and the reader/writer 10 of the first embodiment shown in Figs. 2 and 3 are assigned the same reference signs in order to omit repetition of the same explanation.

The RFID system includes the PC 5, a reader/writer 30, an antenna 2R, and the tag 1 attached to the moving object 50. The antenna 2R carries out the transmission/reception of information to/from the tag 1 within the communication ranges P1 to Pn (n is a natural number). Here, the communication ranges P1 to Pn form the permissible communication area 20 where the transmission/reception of information between the tag 1 and the reader/writer 30 is made possible.

As shown in Fig. 14, the reader/writer 30 includes an MPU 30, the transmitting unit 12, the receiving unit 13, a rotation controlling unit (direction controlling unit) 31, and the antenna 2R. The antenna 2R can be rotated and can perform transmission/reception of information to and from the tag 1.

The rotation controlling unit 31 alters the direction (position) of the communication ranges of the antenna 2R to either one of the communication ranges P1 to Pn by controlling in which direction the antenna 2R should face. That is, the rotation controlling unit 31 controls the direction towards which the antenna 2R points when performing communication with the tag 1. The rotation controlling unit 31 controls the direction of the antenna 2R to face either one of the communication ranges P1 to Pn, so that the communication range of the antenna 2R follows the movement of the tag 1. The rotation controlling unit 31 controls the direction of the antenna 2R by altering its movement in such a manner to move, for example, from an arcing course of a circular or an oval shape in a line that is parallel with the direction of the tag 1. The rotation controlling unit 31 controls the direction of the antenna 2R so that the beam angle (which encompasses the communication range 20 composed of the communication ranges P1 to Pn) covers 180 degrees.

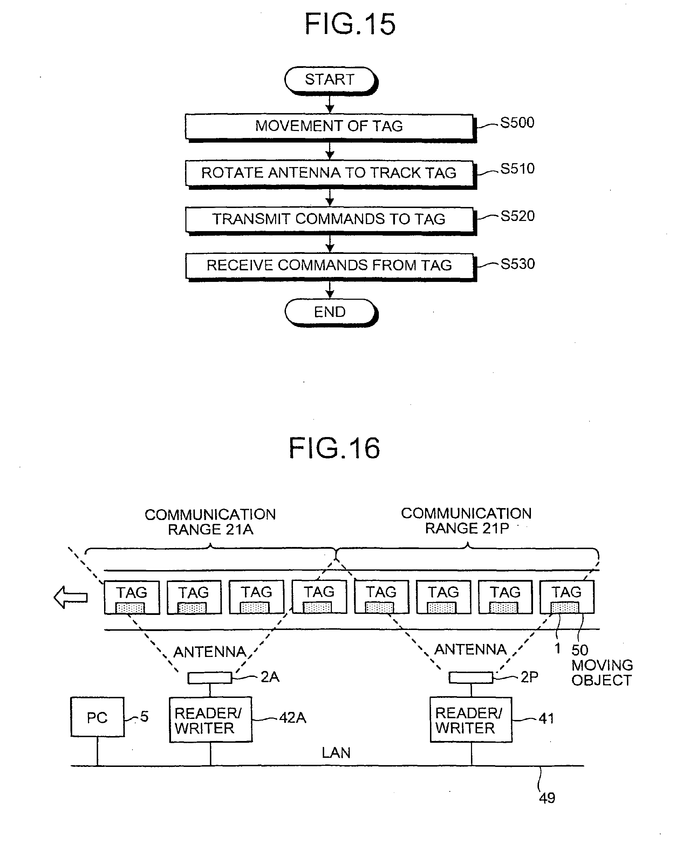

Fig. 15 is a flowchart of a process procedure for tag identification in the RFID system according to the second embodiment. The moving object 50 moves along the route 51 on the belt-type convey or (step S500).

The antenna 2R is pre-set so that the beam direction (direction towards the center of the communication range) faces the direction which is parallel to the route 51 of the tag 1. That is, the initial position of the antenna 2R is set to face in the direction from which the tag 1 comes in (0 degree from the right).

When the reader/writer 10 starts communicating with (receiving response information from) the tag 1 via the antenna 2R, the rotation controlling unit 31 rotates the antenna 2R to follow the movement of the tag 1. The rotation controlling unit 31 is made to rotate at a speed that corresponds to the speed of the belt-type conveyer. Thus, the rotation controlling unit 31 rotates the antenna 2R to track the tag 1 (step S510).

The transmitting unit 12 transmits such commands as "tag identification command" and "write command" to the tag 1 via the antenna 2R (step S520). Similarly, the receiving unit 13 receives commands such as "address response" and "write response" from the tag 1 via the antenna 2R (step S530).

The rotation controlling unit 31 rotates the antenna 2R counterclockwise from the position where its beam is parallel with the route 51 of the tag 1 (0 degree from the right). Thereafter, when the rotation controlling unit 31 rotates the antenna 2R up to the position where its beam is parallel with the route 51 of the tag 1 (180 degrees from the right), then the controlling operation for the antenna 2R to follow the tag 1 is completed. Further, it may be arranged so that when the rotation controlling unit 31 receives the "address response" and/or the "write response", the controlling operation for the antenna 2R to follow the tag 1 is completed.

If the rotation controlling unit 31 controls the direction of the antenna 2R so that it faces the tag 1, then it also controls the direction of the next antenna 2R so that it faces the tag 1. After the rotation controlling unit 31 has controlled the direction of the antenna 2R to make the antenna 2R face the tag 1, the rotation controlling unit 31 then controls the antenna 2R so that the antenna 2R faces the initial position (0 degree right side) from which the tag 1 is expected to come. That is, after the rotation controlling unit 31 first receives information from the tag 1, it controls the antenna 2R to face towards the reverse side (0 degree from right) when the antenna 2R comes to the point where it can no longer receive information of the tag 1. In this way, by controlling the antenna 2R to face towards the direction (0 or 180 degrees from right) that is parallel with the route 51, the range of communication with the tag 1 can be widened.

The rotation controlling unit 31 is not limited to controlling the antenna 2R to rotate it from the "0 degree from the right" to the "180 degrees from the right". The rotation controlling unit 31 can also control the antenna 2R so that the communication range of the antenna 2R can face either one of the communication ranges P1 to Pn. It is acceptable to set the rotation controlling unit 31 so that, after completion of the directional control of the antenna 2R, the rotation controlling unit 31 controls the initial position of the antenna 2R to face towards the position of the next tag 1.

Although in this second embodiment it is explained that the tag 1 moves linearly on the belt-type conveyor, the movement of the tag 1 is not limited to this linear movement. That is, it may be arranged that when the route 51 of the tag 1 includes a curve line, the direction of the antenna 2R is altered in accordance with the route 51 of the tag 1. In this case, the rotation controlling unit 31 controls the direction of the antenna 2R in such a manner that the communication range 21 R of the antenna 2R is superimposed on the route 51 containing the curved line.

As explained above, according to the second embodiment of the present invention, the area for reading information contained in the tag 1 is widened with a relatively simple construction by controlling the direction of the antenna 2R, yet without changing the communication conditions between the reader/writer 10 and the tag 1, such as the communication speed, communication protocol, and the like. Thus, it is possible to move the moving object 50 at a higher speed.

Next, a third embodiment of the present invention is now explained with reference to Figs. 16 to 21.

A RFID system according to a third embodiment includes a first reader/writer 41 for identifying the sequence of the tags, and a second reader/writer 42A for carrying out the read/write operations.

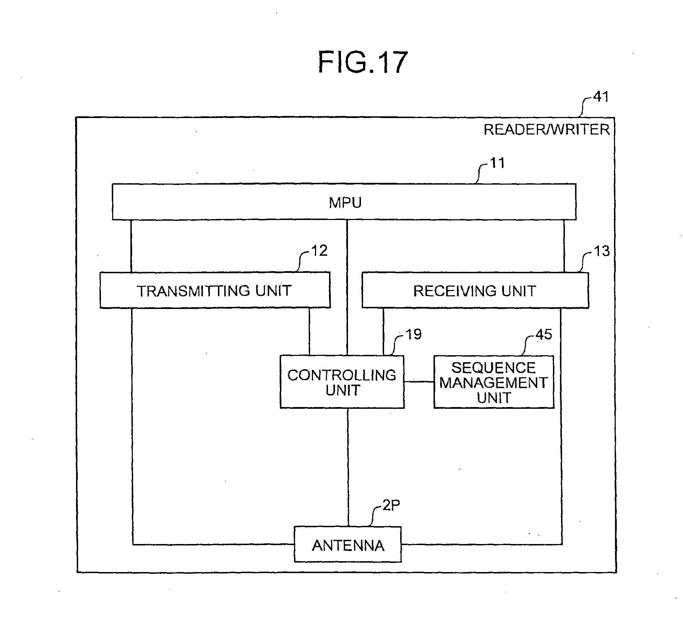

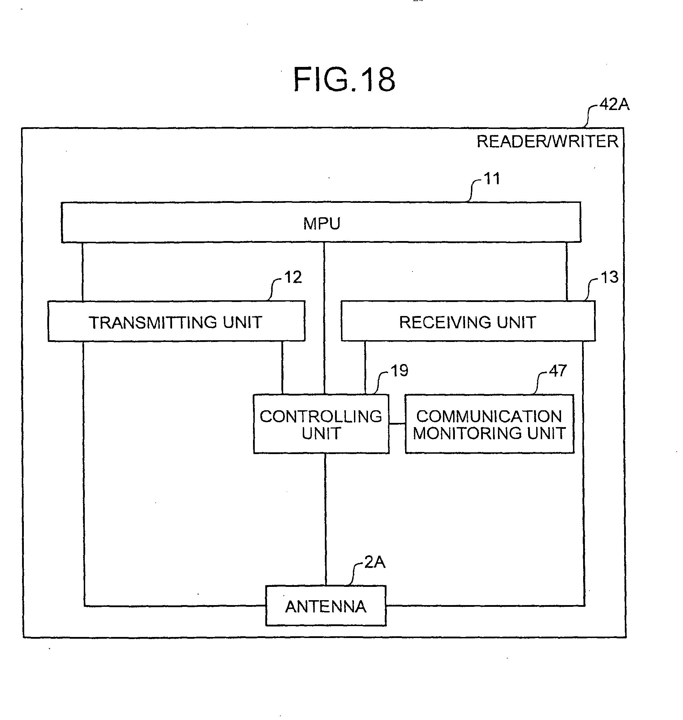

Fig. 16 illustrates is the RFID system according to the third embodiment. Fig. 17 is a block diagram of the reader/writer 41 that identifies the sequence of the tags 1. Fig. 18 is a block diagram of the reader/writer 42A that performs the reading/writing operations from/to the tags 1. Among the constituent members in these Figs. 16 to 18, the members having the same functions as those of the RFID system and the reader/writer 10 of the first embodiment shown in Figs. 2 and 3 are assigned the same reference signs in order to omit repetition of the same explanation.

As shown is Fig. 16, the RFID system includes the PC 5, the reader/writer 41 and the reader/writer 42A (hereinafter a plurality of reader/writer devices may be referred to just as "reader/writers), two antennas 2P and 2A, a plurality of the moving objects 50, and the tags 1 attached to each of the moving objects 50. The reader/writer 41 is positioned upstream in the direction of movement of the moving objects 50 and the reader/writer 42A is positioned downstream. The reader/writer 41 communicates with the tags 1 while the moving objects 50 are moving on a belt-type conveyor, and generates information (the tag monitoring information 90 is explained later) about the sequence of the tags 1 (order of the tags 1 that move outside the communication range, or move into the communication range from outside the communication range).

The reader/writer 42A is positioned downstream in the direction of movement of the moving objects 50 in comparison with the reader/writer 41. The reader/writer 42A communicates while the moving objects 50 are moving on the belt-type conveyor, and performs the reading/writing from/to each of the tags in accordance with the sequence management table 92A (to be explained later) which is located within the tag management information 90 generated by the reader/writer 41.

The antenna 2P is connected to the reader/writer 41, and communicates with the tags 1 within the communication range 21 P. The antenna 2A is connected to the reader/writer 42A, and communicates with the tags 1 within the communication range 21A. The PC 5 is connected to the reader/writers 41 and 42A via the LAN 49, and controls information acquired by the reader/writers 41 and 42A.

As illustrated in Fig.17, the reader/writer 41 includes the MPU 11, the transmitting unit 12, the receiving unit 13, a sequence management unit (sequence information generating unit) 45, and the antenna 2P. The sequence management unit 45 generates information regarding the sequence of the tags 1 on the basis of the "address response" received by the receiving unit 13 from the tags 1. The sequence management unit 45 of the reader/writer 41 consecutively reads a plurality of tags (addresses) flowing moment-by-moment in a sequence using an anti-collision algorithm (identification) (simultaneous reading of a plurality of tags), and detects the sequence of the tags from the relation between the (newly added) tags entering the communication range 21 P of the antenna 2P and the tags leaving (disappearing from) the communication range 21 P, and generates a monitoring list of the sequence of the tags 1 (tag management information 90).

The sequence management unit 45 generates a tag-appearance management table 91 (explained later) showing the relation between the sequence of appearance of each tag 1 (the sequence in which each of the tags 1 moved into the communication range 21 P) and their respective tag addresses; and also a sequence management table 92A showing the sequence of disappearance of each tag 1 (the sequence in which each of the tags 1 has left the communication range 21 P) as the movement sequence. The tag-appearance management table 91 and the sequence management table 92A both as tag management information 90.

As shown in Fig.18, the reader/writer 42A includes the MPU 11, the transmitting unit 12, the receiving unit 13, a communication monitoring unit (communication unit) 47, and the antenna 2A. The communication monitoring unit 47 performs the read/write operation to the tag 1 in accordance with the tag management information 90 generated by the sequence management unit 45 of the reader/writer 41.

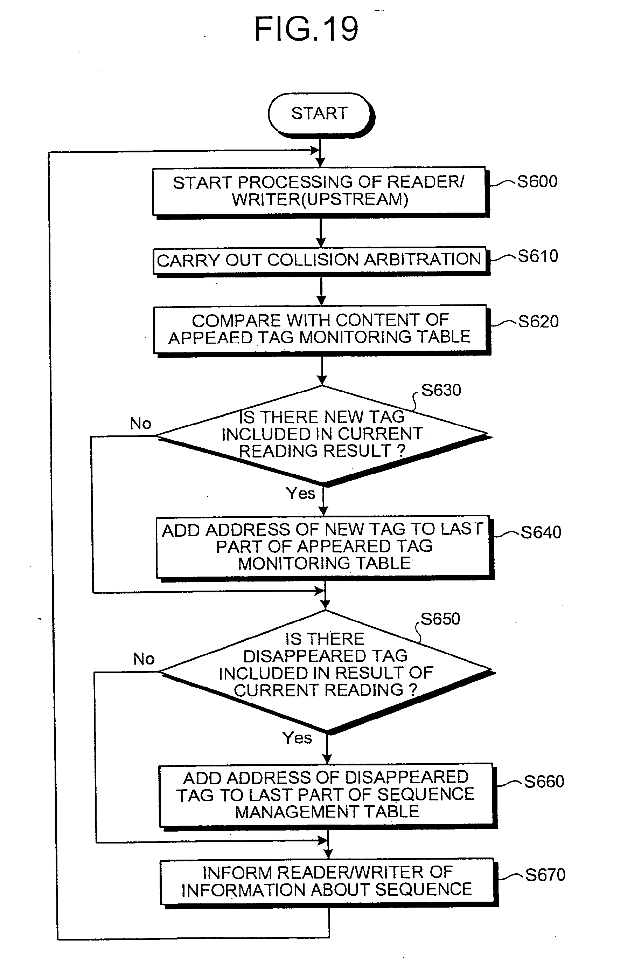

Next, the procedure for processing the RFID system according to the third embodiment is explained. Fig. 19 is a flowchart showing the procedure for identifying the tag movement sequence of the third embodiment. The sequence management unit 45 of the reader/writer 41 detects all the addresses of tags 1 which can be identified by a one-round collision arbitration (at a predetermined time point) for making up the tag monitoring information 90 showing the moving order of the tags 1 (tag moving order) (steps S600, S610). That is, the reader/writer 41 performs an anti-collision operation at a cycle in which a one-round collision arbitration period is covered within a predetermined condition, and the sequence management unit 45 updates the tag-appearance management table 91 and the sequence management table 92A at each cycle.

Here, an explanation is given as to the relationship between the collision arbitration period and the movement time of the tag 1. First, the time required for one round of the collision arbitration is set to the collision arbitration period (T) (seconds), the moving speed of the tag 1 is set to (S) (meters per second), and the permissible communication range between the tag 1 and the reader/writer 41 is set to a permissible communication range L (meters).

The condition by which the reading of the tag 1 that newly entered the communication range 21 P during the collision arbitration period (T) of one round at the next round is secured is that the moving distance of the tag 1 (TS) during one round time does not exceed 1/2 of the communicable range (L). This condition is represented by the equation (2) as shown below.

$$TS \leq L/2 \qquad\qquad\qquad\qquad (2)$$

Here, the collision arbitration period (T) is represented below provided that the number of tags to be processed is N, and the tag processing speed is M.

$$T = N/M \qquad (3)$$

Thus, the speed (S) can be calculated using the following equation (4).

$$S \le L/2T = ML/2N \qquad (4)$$

For example, the number of tags N that the reader/writer 41 can process during one round will be obtained by the following equation;

N = L/(distance between adjacent tags)= 1/0.15 = 6.7, where the permissible communication range (L) is 1 meter, and the distance between adjacent tags 1 is 0.15 meter.

The updating process of the tag-appearance management table 91 by the sequence monitoring unit 45 is carried out by comparing the reading result of the previous (m-1)th cycle (m is a natural number) and that of the current m-th cycle (step S620).

The sequence management unit 45 determines whether a new tag 1 is included in the reading result of the current cycle in comparison with the reading result of the previous cycle (step S630). If there is a new tag 1 included in the current reading result (step S630: yes), the sequence management unit 45 adds the address of this tag 1 to the last part of the tag-appearance management table 91 (step S640). On the other hand, if there is no new tag 1 included in the current reading result (step S630: no), then the sequence management unit 45 does not add any tag address to the tag-appearance management table 91.

Further, the sequence management unit 45 determines whether the tag 1 which disappeared from the communication range 21 P in the reading result of the current cycle in comparison with the reading result of the previous cycle (step S650). If there is the tag 1 which disappeared from the communication range 21 P in the reading result of the current cycle included in the current reading result (step S650: yes), the sequence management unit 45 adds the address of this tag 1 to the last part of the sequence management table 92A (step S660). On the other hand, if there is no tag 1 which disappeared from the communication range 21 P in the reading result of the current cycle (step S650: no), then the sequence management unit 45 does not add any tag address to the tag-appearance management table 92A.

In this way, since the sequence management unit 45 adds the tag address of the tag 1 which disappeared from the communication range 21 P to the last part of the sequence management table 92A, correct information regarding the movement sequence of the tags 1 can be obtained, and the reader/writer 42A can thereby reduce unexpected omissions during processing of the read/write operation to the tag 1.

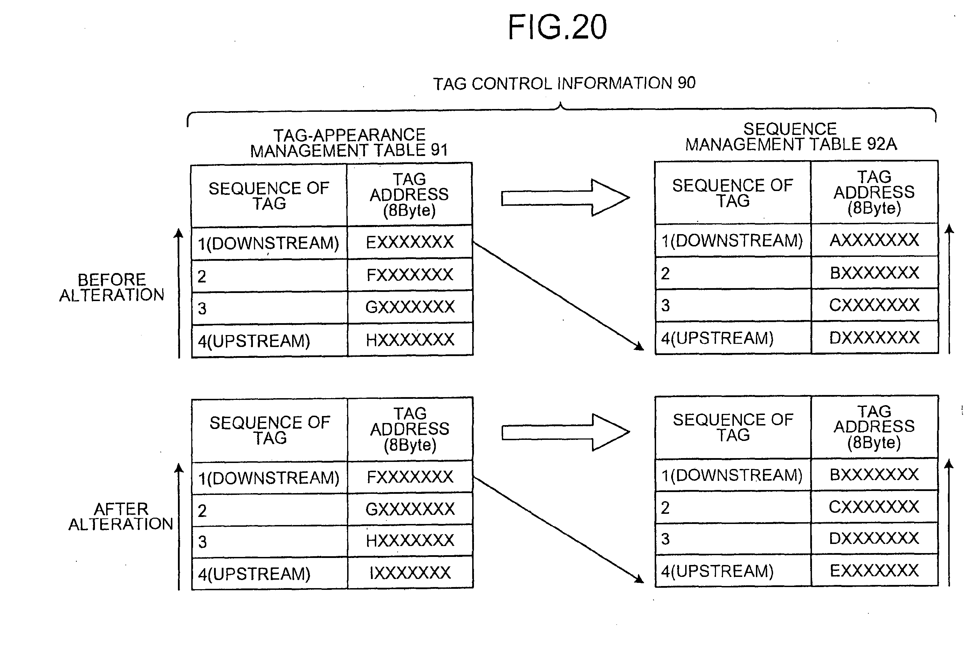

Fig. 20 is an illustration that explains the alteration of the tag management information according to the third embodiment. The tag management table 90 is composed of the tag-appearance management table 91 and the sequence management table 92A. Here, the structures of the tag-appearance management table 91 and the sequence management table 92A are both controlled by, for example, the FIFO (first-in, first-out) method (the information stored first is deleted first), and the storing sequence of information (tag address) is updated by shifting the previously stored information when adding and/or deleting of information (tag address) is needed. The tag-appearance management table 91 stores the tag address (8 bytes) of each of the tags 1 in the sequence of their appearances in the communication range 21 P. Here, the case in which the tag address of each of the tags are stored in the sequence of tag 1 (E), tag 1 (F), tag 1 (G) and tag 1 (H).

The sequence management table 92A stores the tag address (8 bytes) of each of the tags in the sequence of their disappearances from the communication range 21 P. Here, the case in which the tag addresses of each of the tags are stored in the sequence of tag 1 (A), tag 1 (B), tag 1 (C) and tag 1 (D) is shown as the sequence management table 92A before alteration of the sequence.

If the tag 1 (E) disappears from the communication range 21 P and a new tag 1 (I) appears when the sequence management unit 45 has stored the tag-appearance management table 91 (before alteration of the sequence) and the sequence management table 92A (before alteration of the sequence) as the tag management information 90, the tag-appearance management table 91 will, after alteration of the sequence, store the tag address of each of the tags 1 in the sequence of tag 1 (F), tag 1 (G), tag 1 (H) and tag 1 (I). The sequence management table 92A will, after alteration of the sequence, newly store the tag address of the disappeared tag 1 (E), and simultaneously deletes the tag address of the (oldest) tag 1 (A) which had been stored previously. At this time, the sequence management table 92A will, after alteration of the sequence, store the tag address of each of the tags 1 in the sequence of tag 1 (B), tag 1 (C), tag 1 (D) and tag 1 (E) as the sequence of disappearance from the communication range 21 P.

The sequence management unit 45 transmits the sequence management table 92A or the newly added tag address to the sequence management table 92A as an update information (of the sequence management tale 92A) to the reader/writer 42A (step S670).

It should be noted that the reason why the depth of the FIFO of the tag-appearance management table 91 and/or the sequence management table 92A is shown as four layers instead of the normal three layers is because there is a case in which four tags can be identified for processing convenience or depending on the timing of anti-collision processing.

It should also be noted that the deletion of the tag address in the lowermost stream of the sequence management table 92A may be carried out by pushing out the tag address with the addition of the new information, or may be carried out after receiving a notice of the completion of processing at the reader/writer 42A.

It should further be noted that although in this third embodiment the tag management information 90 is composed of two tables; namely the tag-appearance management table 91 and the sequence management table 92A, if no tags exist, such as at the time of initial activation of the belt-type conveyer, the tag-appearance management table 91 may also perform the functions of the sequence management table 92A.

Furthermore, when deleting the tag address from the tag-appearance management table 91, it can be arranged so that the tag 1 is read two or more times taking into consideration a temporary reading failure because of noise. Further, the tag management information 90 is not limited to the case in which the sequence management unit 45 of the reader/writer 41 performs storage, but it can be arranged so that the PC 5 performs the storage instead. Still further, it can also be arranged so that the sequence management unit 45 stores either the tag-appearance management table 91 or the sequence management table 92A, while the PC 5 stores the other management table.

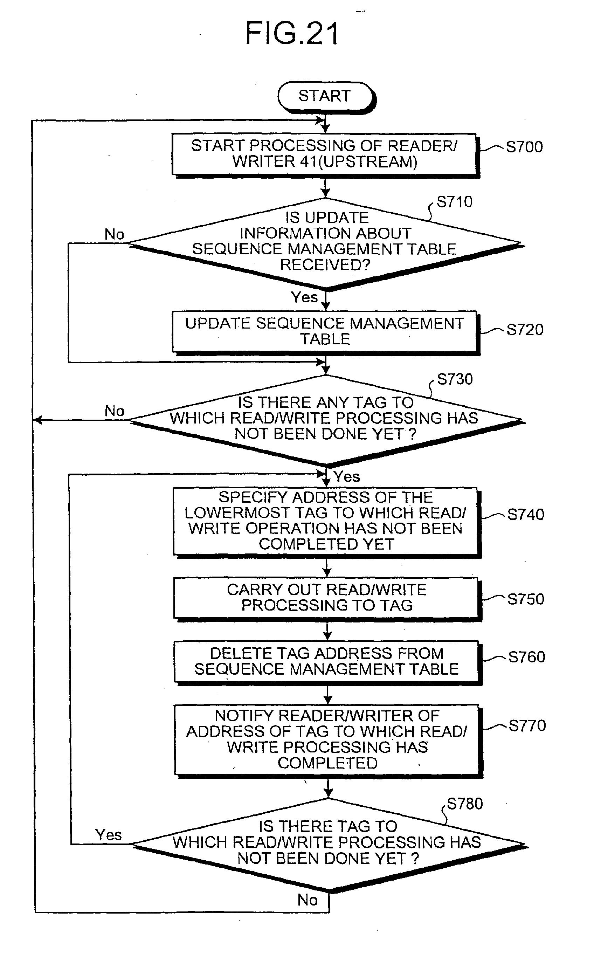

Fig. 21 is flowchart illustrating the procedure for writing/reading to the tag according to the third embodiment. The reader/writer 42A starts processing and the communication management unit 47 of the reader/writer 42A checks whether it has received the update information about the sequence management table 92A from the reader/writer 41 (steps S700, S710).

When the communication management unit 47 receives the update information about the sequence management table 92A from the reader/writer 41, it updates the previously stored sequence management table 92A (step S720). The communication management unit 47 determines whether or not there are tags 1 which are stored in the sequence management table 92A but whose read/write processing have not been completed yet (step S730). If there are such tags 1 whose read/write processing have not been completed yet, then the reader/write 42A specifies the address of the tag 1 in the lowermost stream among the tags 1 whose read/write operations have not been completed yet (step S740). The reader/writer 42A carries out read/write processing of the specified tag address in accordance with the procedure explained in Fig. 6 of the first embodiment (step S750).

The communication management unit 47 deletes the tag address of the tag 1 on which it has carried out the read/write processing from the sequence management table 92A (step S760). If there is a necessity, the communication management unit 47 notifies the sequence management unit 45 about the tag address of the tag 1 on which the reader/writer 42A has carried out the read/write processing (step S770).

The communication management unit 47 determines whether or not there are tags 1 which are stored in the sequence management table 92A but whose read/write processing have not been completed yet (step S780). If there are such tags which are stored in the sequence management table 92A and whose read/write processing have not been completed yet (step S780: No), then the procedure from steps S740 to S780 are repetitively carried out. By going through this repetitive operation, the reader/writer 41 can carry out the read/write processing of the tags in the sequence of disappearance from the communication range 21A.

It should be noted that in the RFID system according to the third embodiment, the read/write processing of the tags 1 can be efficiently carried out by narrowing the beam of the antenna 2P disposed in the upstream of the belt-type conveyer, and widening the beam of the antenna 2A that is positioned downstream.

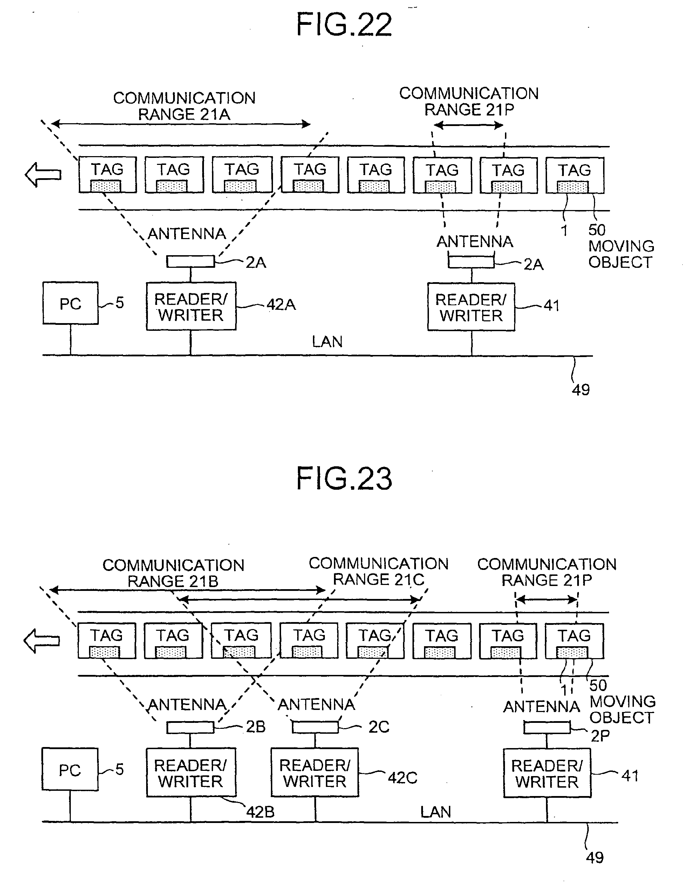

Fig. 22 is a schematic diagram of the system configuration of the RFID system in which the beam width has been changed. Since it is sufficient if the antenna 2P positioned upstream of the belt-type conveyor can read only the tag address of all the tags 1 flowing thereon, it is better, from the viewpoint of the anti-collision processing, if the number of tags which can be processed at once is fewer. Accordingly, it will be sufficient if the permissible communication range (L) is double or more the length of the tag moving distance (TS) within the time of one-round of the collision arbitration.

If the beam of the antenna 2P is widened, it is necessary to identify all the tags 1 from among the numerous tags 1 under control of the anti-collision processing, and to detect the tags 1 newly entering the communication range (L) and those disappearing from the communication range 21 P. Thus, as mentioned before, not only the tag movement distance (TS) within the time of one round of the collision arbitration must be arranged not to exceed half of the permissible communication range (L), but the width of the beam of the antenna 2P should be narrowed so that the number of tags to be processed at once should be made smaller. The beam of the antenna 2P may be set based on the speed of the tags 1 or the distance between adjacent tags.

Further, since the antenna 2A positioned downstream from the belt-type conveyer is informed in advance of the tag address information (tag address) of the tags 1, the reader/writer 42A can access the tag 1 by directly specifying the tag 1 by its tag address. Due to such direct access, the reader/writer 42A does not require the collision arbitration, and thus the reader/writer 42A can concentrate on the read/write processing of each tag 1. Accordingly, by widening the beam of the antenna 2A, the antenna 2A can extend the permissible communication distance to the tag 1 (the length of the permissible communication range between the tag 1 and the antenna 2A), and the time for processing the read/write operation to the tag 1 becomes extended. Due to this extended communication distance, the time required for read/write processing carried out by the reader/writer 42A can be temporally increased.

It should be noted that although the reader/writer 41 and the reader/writer 42A are formed and positioned separately, these reader/writers can be combined into one device. In this case, the control of communication between the antenna 2A and 2P can be executed by only one reader/writer.

Further, although the reader/writer 41 transmits the sequence management table 92A to the reader/writer 42A, it may be arranged so that the reader/writer 41 transmits the sequence management table 92A to the reader/writer 42A via the PC 5.

As mentioned above, since the reader/writer 42A that is positioned downstream carries out read/write processing in accordance with the sequence management table 92A that is sent from the upstream reader/writer 41, the reader/writer 42A does not require the anti-collision process. Due to this advantage, the reader/writer 42A can use the time of the thus unnecessary anti-collision processing to perform the read/write processing of the tags 1.

As mentioned above, in this third embodiment since the information concerning the sequence of the tags 1 (the sequence of the tags 1 entering the communication range 21 P) can be acquired by the reader/writer 41 in advance, the reader/writer 42A can carry out the read/write processing of the tags 1 in the sequence of their disappearance from the communication range 21 P. Thus, the reader/writer 42A can reduce an unexpected omission of the read/write processing of the tags 1, thus efficiently carrying out the read/write processing of the tags 1.

Further, by narrowing the beam of the antenna 2P of the reader/writer 42A, an identification of a plurality of redundant tags becomes unncessary, and thus efficient tag identification is achieved. Further, by widening the beam of the antenna 2A of the reader/writer 42A that carries out read/write operation, it is possible to gain more time to spend on read/write processing by the reader/writer 42A.

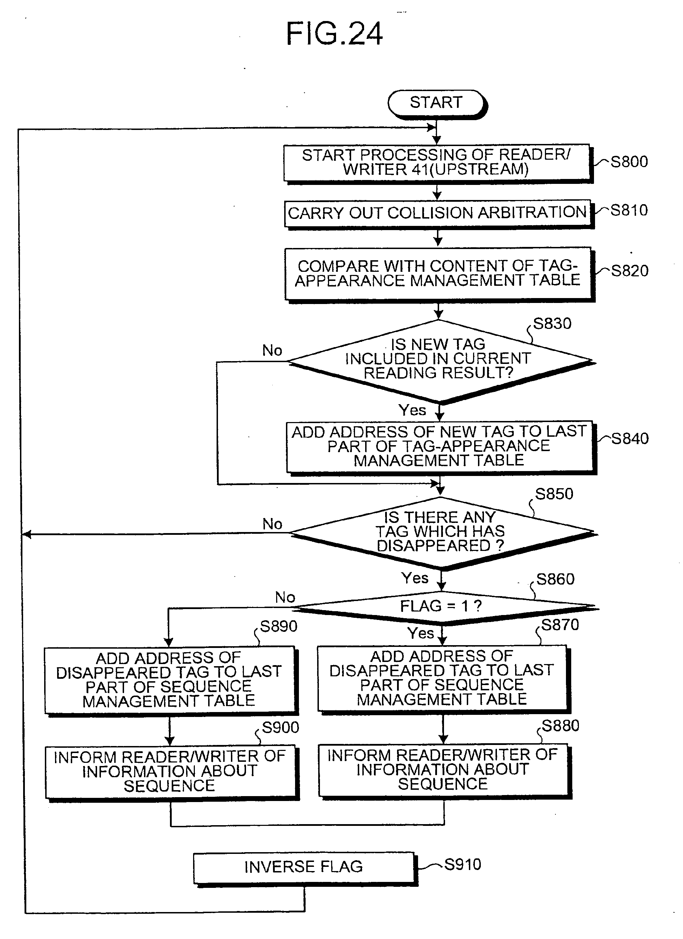

Next, a fourth embodiment of the present invention is now explained with reference to Figs. 23 and 24.

An RFID system according to the fourth embodiment includes a plurality of reader/writers.

Fig. 23 is a schematic diagram of the system configuration of the RFID system according to the fourth embodiment. Among the constituent elements in Fig. 23, the elements having the same functions as those of the RFID system of the third embodiment shown in Fig. 16 are assigned the same reference signs in order to omit repetition of the same explanation.

As shown in Fig. 23, the RFID system includes the PC 5; a plurality of the reader/writers 41, 42B, 42C; a plurality of the antennas 2P, 2B, 2C; a plurality of moving objects 50, and a tag 1 attached to each of the moving objects 50.

The reader/writer 41 is positioned upstream (right side of the figure) of the flow of the tags 1 than the other reader/writers 42B and 42C in the route 51 of the moving objects (tags) 50.

The sequence management unit 45 generates a sequence management table 92B that is sent to the reader/writer 42B, and a sequence management table 92C that is sent to the reader/writer 42C. The tag management information 90 is composed of the tag-appearance management table 91 and the sequence management tables 92B and 92C.

The reader/writers 42B, 42C have the same structure as that of the reader/writer 42A, and each one carries out read/write processing of each of the tags 1 in accordance with the sequence management tables 92B and 92C of the tag management information 90 generated by the reader/writer 41. The sequence managment tables 92B and 92C are constructed in the same way as that of the sequence management table 92A, wherein the sequence management table 92B shows the tag addresses of each of the tags 1 to be processed by the reader/writer 42B; and the sequence management table 92C, wherein the management table 92C shows the tag addresses of each of the tags 1 to be processed by the reader/writer 42C. The antenna 2B is connected to the reader/writer 42B and communicates with the tags 1 in the communication range 21B; while the antenna 2C is connected to the reader/writer 42C and communicates with the tags 1 in the communication range 21C.

Fig. 24 is a flowchart illustrating the procedure for identifying the sequence of tag movement in the fourth embodiment. The sequence management unit 45 of the reader/writer 41 detects all the addresses of the tags 1 which can be identified by a one-round collision arbitration in order to create the tag management information 90 that shows the movement sequence of the tags 1 (steps S800, S810).

The updating process of the tag-appearance management table 91 by the sequence management unit 45 is carried out by comparing the results of readings in the previous cycle (that is, the previous tag-appearance management table) with that of the current cycle (that is, the newest tag-appearance management table) (step S820). The sequence management unit 45 determines whether a new tag 1 is included in the reading results of the current cycle with respect to the reading results of the previous cycle (step S830).

If there is a new tag 1 included in the current reading result (step S830: yes), the sequence management unit 45 adds the address of this tag 1 to the last part of the tag-appearance management table 91 (step S840). On the other hand, if there is no new tag 1 included in the current reading result (step S830: no), then the sequence management unit 45 does not add any tag address to the tag-appearance management table 91.

Further, the sequence management unit 45 determines whether there is a tag 1 which disappeared from the communication range 21 P in the reading result of the current cycle in comparison with the reading results of the previous cycle (step S850). If there is a tag 1 which disappeared from the communication range 21 P in the reading result of the current cycle with respect to the reading result of the previous cycle (step S850: yes), the sequence management unit 45 checks whether the flag is "1" or "0", which determines whether the disappeared tags 1 are stored in either sequence management table 92B or sequence management table 92C (step S860).

The flag in this case shows "1", and the addresses of the tags 1 which disappeared from the communication range 21 P are stored in the sequence management table 92B. If the flag is "0", the addresses of the tags 1 which disappeared from the communication range 21 P are stored in the sequence management table 92C.

When the flag has a value "1" (step S860: yes), the sequence management unit 45 adds the addresses of the tags 1 which disappeared from the communication range 21 P to the last part of the sequence management table 92B (step S870).

The sequence management unit 45 transmits the sequence management table 92B, or the tag addresses newly added to the sequence management table 92B, to the reader/writer 42B as information regarding the sequence of the tags 1 (update information of the sequence management table 92B) (step S880).

On the other hand, when the flag has a value "0" (step S860:), the sequence management unit 45 adds the addresses of the tags 1 which disappeared from the communication range 21 P to the last part of the sequence management table 92C (step S890).

The sequence management unit 45 transmits the sequence management table 92C, or the tag addresses newly added to the sequence management table 92C, to the reader/writer 42C as information regarding the sequence of the tags 1 (update information of the sequence management table 92C) (step S900).

After the sequence management tables 92B and 92C are notified of the update, the flags are reversed (step S910). Regarding the reversal of the flag, it means flag "1" becomes "0"; and flag "0" becomes "1".

When, in the tag-appearance management table 91, the tag addresses are stored in the sequence of tag 1 (A), tag 1 (B), tag 1 (C), tag 1 (D), tag 1 (E) and tag 1 (F); then in the sequence management table 92B, the tag addresses are registered in the sequence of tag 1 (A), tag 1 (C) and tag 1 (E); and in the sequence management table 92C, the tag addresses are registered in the sequence of tag 1 (B), tag 1 (D) and tag 1 (F). Due to this arrangement, the processing rights (right to perform reading and writing) on the tags 1 is given alternately to the two reader/writers 42B and 42C that are positioned downstream.

In step S850, when the result of the newest reading indicates that no tags 1 have disappeared from the communication range 21 P, the addition of tag addresses to the sequence management tables 92B and 92C is not carried out. Since the reader/writers 42B and 42C carry out the read/write processing of the tags 1 following the same procedure as that of the third embodiment explained in Fig. 21, the detailed explanation thereabout is omitted here in order to avoid repetition.

It should be noted that although in this fourth embodiment there are two reader/writers (reader/writers 42B and 42C) that carry out read/write processing of the tags 1, there can be three or more reader/writers that carry out the read/write processing of the tags 1. Even when there are three or more reader/writers, the reader/writer 41 creates a sequence management table for each of the reader/writers that carry out the read/write processing.

As mentioned above, since the RFID system is equipped with a plurality of reader/writers 42B and 42C, a plurality of read/write processing of the tags 1 can be distributed between these reader/writers 42B and 42C.

Thus, the load for each of the read/write processing of the tags 1 can be dispersed because the plurality of read/write processing of the tags 1 can be distributed between the reader/writers 42B and 42C. Thus, the speed of the tags 1 in the RFID system can be set much higher.

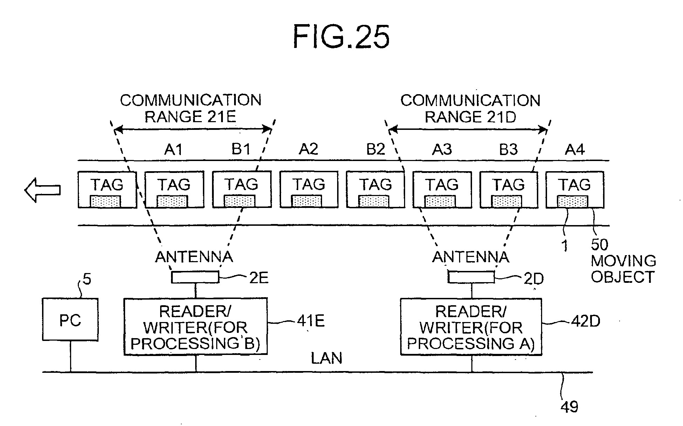

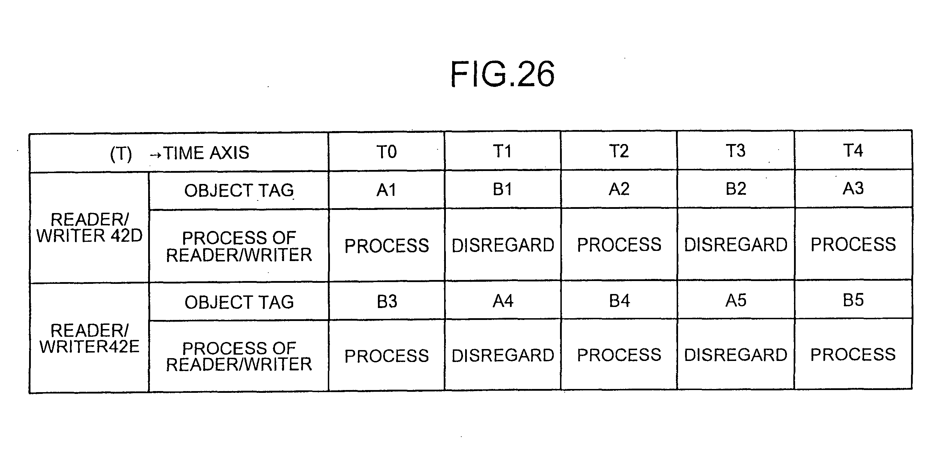

Next, a fifth embodiment of the present invention is now explained with reference to Figs. 25 and 26.

An RFID system according to the fifth embodiment includes a plurality of reader/writers and these reader/writers are positioned with a predetermined space therebetween. Moreover, each of the reader/writers carries out the tag identification process and read/write operation to the corresponding tags 1. The RFID system synchronizes the access between the tags 1 in their continuous flow and the plurality of reader/writers to form time slots, enabling thereby these reader/writers (antennas) to process alternately, so as to disperse the loads thereon.

Fig. 25 is a schematic view of the RFID system according to the fifth embodiment. Among the constituent members in Fig.25, the members having the same functions as those of the RFID system of the third embodiment shown in Fig. 16 are put the same reference numerals, in order to omit repetition of the same explanation.

As shown in Fig. 25, the RFID system includes the PC 5, the reader/writers 42D and 42E, the antennas 2D and 2E, and the tags 1 attached to each of the moving objects 50. The reader/writer 42D is located in the upper stream in comparison with the location of the reader/writer 42E.

The reader/writers 42D and 42E are disposed with a predetermined space therebetween in accordance with the moving speed of the moving objects 50 and the distance between adjacent moving objects 50. The reader/writers 42D and 42E alternately process the tags 1 (carry out tag identification, read/write operation) which are flowing in order on the belt-type conveyer at predetermined distances thereamong.

Precisely, the reader/writers 42D and 42E are placed on the belt-type conveyer, the controlling unit 19 of the reader/writer 42D is arranged to process only "A-system" tags such as A1, A2, A3, ..., Ax (where x is a natural number) within the communication range 21 D, while the other reader/writer 42E is arranged to process only "B-system" tags such as B1, B2, B3, ..., Bx within the communication range 21 E.

It should be arranged in such a manner that the moving speed of the tags 1, the distance between adjacent tags 1, the area (distance) of the communication range 21 D are set beforehand in order that a plurality of A-system tags 1 are not concurrently moved into the communication range 21 D, whereas the moving speed of the tags 1, the distance between adjacent tags 1, the area (distance) of the communication range 21 E are set beforehand in order that a plurality of B-system tags 1 are not concurrently moved into the communication range 21 E.

The reader/writer 42D should be set to process only the "A-system" tags 1 entering the communication range 21D at a predetermined time interval and disregard the "B-system" tags 1 entering the communication range 21 D at a predetermined time interval. The time interval here is set on the basis of the moving speed of the tags 1, the distance between adjacent tags 1, the area (distance) of the communication range 21 D.

On the other hand, the reader/writer 42E should be set to process only the "B-system" tags 1 entering the communication range 21 E at a predetermined time interval, and disregard the "A-system" tags 1 entering the communication range 21 E at a predetermined time interval. The time interval here is set on the basis of the moving speed of the tags 1, the distance between adjacent tags 1, the area (distance) of the communication range 21 E.

Fig. 26 is an illustration for explaining the tags to be processed by each of the reader/writers. As shown in Fig. 26, the reader/writer 42D processes the tag A1 at the time point T0, ignores the tag B1 (at the time point T1), but processes tag A2 at the time point T2 after ignoring the tag B1. The reader/writer 42D, however, can be arranged to continue processing the tag A1 at the time point T1 as well. Further, the reader/writer 42D processes, after processing the tag A2 at the time point T2, disregarding the tag B2 (at the time point T3), processes tag A3 at the time point T4. The reader/writer 42D, however, can be arranged to continue processing the tag A2 at the time point T3 as well. On the other hand, the reader/writer 42E processes, before the time point T0, the tags B1 and B2 after disregarding the tags A1 and A2 (not shown). The reader/writer 42E processes the tag B3 at the time point T0, disregards the tag A4 (at the time point T1), but processes the tag B4 at the time point T2 after disregarding the tag A4. The reader/writer 42E, however, can be arranged to continue processing the tag B3 at the time point T1 as well. Further, the reader/writer 42E processes, after processing the tag B4 (at the time point T2), and disregarding the tag A5 (at the time point T3), processes tag B5 at the time point T4. The reader/writer 42E, however, can be arranged to continue processing the tag B4 at the time point T2 as well. After this, the reader/writer 42D can process the tags A4 and A5 which the reader/writer 42E had disregarded.

With such an arrangement, the time that the reader/writer devices 42D and 42E can spend for processing respective tags 1 can be made twice as long as the time period of the case in which there is only one reader/writer, which means that the speeding up of the tags 1 is made possible due to the increase in time for processing those tags.

It should be noted that although the RFID system of this fifth embodiment is equipped with two reader/writers; namely the reader/writers 42D and 42E, it may be equipped with three or more than three reader/writers. In this case, more tags can be processed than the case in which the RFID system is equipped with two reader/writers, which allows raising the speed of the belt-type conveyer. It should also be noted that the reader/writers 42D and 42E may carry out only the read/write operation to the tags 1, but may also carry out both the tag identification process and the read/write operation to the tags 1.

As mentioned above, since the RFID system is equipped with a plurality of reader/writers that separately process the tags, more tags can be processed at one time.

Further, as explained above, the plurality of read/write operations to the tags 1 can be distributed between the reader/writers 42D and 42E, and thus the load on the read/write operations to each of the tags 1 can be dispersed. Thus, the moving speed of the tags 1 in the RFID system can be greatly raised.

It should further be noted that the RFID system is not limited to the configuration as shown in the first to fifth embodiments, but two or more of the RFID systems described in these embodiments can be combined to carry out processing the tag identification and read/write operation to the tags 1.

According to an embodiment of one aspect of the present invention, since the communication ranges of a plurality of antennas are disposed along a predetermined route of a wireless tag in a consecutive manner, the communicable range between the wireless tag and the antennas is extended, and reading from and writing to the tag (hereinafter may be referred to just as "read/write operation" or "read/write process to the tag) can be efficiently made.

According to an embodiment of another aspect of the present invention, since the direction in which the antenna should face is controlled in such a manner that the communication range of the antenna follows the moving position of the wireless tag, the communicable range between the wireless tag and the antenna can be extended with a relatively simple structure, and the read/write operation to the wireless tag can thus be efficiently performed.

According to an embodiment of still another aspect of the present invention, since the RFID system is equipped with a first reader/writer that generates information about moving order of the wireless tags, a second reader/writer carries out read/write operation to the wireless tags without acquiring information directly from the tags, but in accordance with the information obtained from the first reader/writer, so that the read/write operation to the wireless tags can be efficiently performed.

According to an embodiment of still another aspect of the present invention, since the first reader/writer generates order information on the basis of the order of the wireless tags that move out of the communication range within which the first reader/writer communicates with the wireless tags, or move into the communication range from outside, information about moving order of the wireless tags can be correctly obtained, so that the read/write operation to the wireless tags can be efficiently performed.

According to an embodiment of still another aspect of the present invention, since the communication range of the first reader/writer is set narrower than the communication range of the second reader/writer, the first reader/writer does not need to grasp identification information about a plurality of superfluous tags, and simultaneously the second reader/writer can carry out read/write operation to the wireless tags with ample time, so that the read/write operation to the wireless tags can be efficiently and stably performed.

According to an embodiment of still another aspect of the present invention, since the order information corresponding to a plurality of second reader/writers is generated for each of the second reader/writers, read/write operation to a plurality of wireless tags can be carried out in a distributed manner by the plurality of second reader/writer devices, so that the load of read/write operation to a plurality of wireless tags can be divided.

According to an embodiment of a still further aspect of the present invention, since each of the plurality of reader/writers is spaced from its adjacent reader/writer in consideration of the moving speed of the wireless tags, the distance between adjacent wireless tags, and also the communication range of each reader/writer, the read/write operation to a plurality of wireless tags can be carried out in a distributed manner among a plurality of second reader/writers, so that the load of read/write operation to a plurality of wireless tags can be divided.

Although the invention has been described with respect to a specific embodiment for a complete and clear disclosure, the appended claims are not to be thus limited but are to be construed as embodying all modifications and alternative constructions that may occur to one skilled in the art which fairly fall within the basic teaching herein set forth.

## Claims

1. A reader/writer for a wireless tag that moves, comprising:

   a plurality of antennas that receive a read signal from the wireless tag and transmit a write signal to the wireless tag, each antenna having a communication range, the antennas being positioned in such a manner that a communication range of any one of the antennas overlaps with a communication range of adjacent antenna along a route in which the wireless tag moves; and
   a signal processing unit that divides the write signal into a plurality of divisional write-signals, each divisional write-signal corresponding to each of the antennas, and combines the read signals which are received by the antennas into a combined read-signal.

2. A reader/writer for a wireless tag that moves, comprising:

   an antenna that receives a read signal from the wireless tag and that transmits a write signal to the wireless tag, the antenna having a communication range; and
   a controlling unit that controls an orientation of the antenna in such a manner that the wireless tag is in the communication range.

3. An RFID system for a plurality of wireless tags that move, comprising:

   a first reader/writer that includes a sequence information generating unit which receives identification information from each of the wireless tags and, based on the identification information, generates sequence information that represents a sequence in which the wireless tags move, and
   a second reader/writer that includes a communication unit which reads and writes information from and to the wireless tags based on the sequence information.

4. The RFID system according to claim 3, wherein the sequence information generating unit generates the sequence information in accordance with a sequence in which the wireless tags move out of a communication range of the first reader/writer, or a sequence in which the wireless tags enter into the communication range.

5. The RFID system according to claim 3, wherein the communication range of the first reader/writer is narrower than a communication range of the second reader/writer.

6. The RFID system according to claim 3, further comprising a plurality of the second reader/writers, and the sequence information generating unit generates sequence information corresponding to each of the second reader/writer.

7. An RFID system for a plurality of wireless tags that move, comprising:

a plurality of reader/writers that receive wireless tag identification information from the wireless tags and write and read information to and from the wireless tags based on the identification information, the reader/writers being positioned with an intervening space therebetween, wherein the space is calculated based on a speed of movement of the wireless tags, a distance between adjacent wireless tags, and a communication range of each reader/writer.

# FIG.1

COMMUNICATION
RANGE

21Y

COMMUNICATION RANGE

21X

MOVEMENT 51
ROUTE

MOVING
OBJECT

50

1

TAG

(2)RESPONSE

(1)ADDRESS
REQUEST

ANTENNA

2Y

ANTENNA

2X

PC

5

READER/
WRITER

10

EP 1 643 413 A2

# FIG.2

COMMUNICABLE
AREA 20

COMMUNICATION RANGE
21Y

COMMUNICATION RANGE
21Z

COMMUNICATION RANGE
21X

50

MOVING
OBJECT
TAG

1

51 MOVEMENT
ROUTE

ANTENNA ~2Z

ANTENNA ~2Y

ANTENNA ~2X

5

PC

10

READER/
WRITER

EP 1 643 413 A2

# FIG.3

# FIG.4

# FIG.5

TRANSMITTING UNIT — 12

RECEIVING UNIT — 13

LPF — 140

H1

HYBRID

H2

H3

ANTENNA 2W

ANTENNA 2X

ANTENNA 2Y

ANTENNA 2Z

— 14

SIGNAL DIVIDING/ COMBINING UNIT

# FIG.6

START

ISSUE "TAG IDENTIFICATION REQUEST" — S100

ANALYZE CONTENT OF REQUEST — S110

ISSUE "TAG IDENTIFICATION REQUEST" COMMAND — S120

SEND "TAG IDENTIFICATION COMMAND" BY ANTENNAS 2A TO 2C TO TAG 1 — S130

IS THERE RESPONSE FROM TAG 1 ? — S140 · No

Yes

RECEIVE "ADDRESS RESPONSE" BY ANTENNAS 2A TO 2C TO FROM TAG 1 — S150

INFORM COMPLETION (OR INCOMPLETION) TO MPU — S160

RETRY OUT ? — S170 · Yes

No

IS THERE RESPONSE FROM TAG ? — S180 · No

Yes

CHECK CONTENT OF RESPONSE — S190

TIME OUT — S210

IS CONTENT OF RESPONSE RELEVANT ? — S200 · No

Yes

CHECK CONTENT OF RESPONSE — S220

PERMISSIBLE TIME FOR ACQUIRING "ADDRESS RESPONSE" OVER? — S230 · No

Yes

END CORRECTLY ? — S240 · Yes

No

ERROR IN PROCESSING — S260

COMPLETE ACQUISITION OF "TAG ADDRESS" (REGISTER ETC.) — S250

END

# FIG.7

| PREAMBLE | DELIMITER | COMMAND | ADDRESS | MASK | DATA | CRC |
|----------|-----------|---------|---------|------|------|-----|

# FIG.8

| PREAMBLE | ID | CRC |
|----------|----|----|

EP 1 643 413 A2

# FIG.9

```
                    ( START )
                        │
                        ▼
        ISSUE "TAG write REQUEST"(ADDRESS
                SPECIFICATION)                    ─S300
                        │
                        ▼
        ANALYZE CONTENT OF REQUEST               ─S310
                        │
                        ▼
        ISSUE "TAG IDENTIFICATION REQUEST"       ─S320
                COMMAND
                        │
                        ▼
        SEND "TAG IDENTIFICATION COMMAND" BY     ─S330
        ANTENNAS 2A TO 2C TO TAG 1
                        │
                        ▼                S340
              IS THERE RESPONSE                   No
                FROM TAG 1 ?  ─────────────────────┐
                    Yes │                          │
                        ▼                          │
        RECEIVE "ADDRESS RESPONSE" BY    ─S350     │
        ANTENNAS 2A TO 2C TO FROM TAG 1           │
                        │                          │
                        ▼                ─S360     │
              INFORM COMPLETION  ◄─────────────────┘
        (OR INCOMPLETION) TO MPU
                        │
                        ▼                S370
                RETRY OUT ?  ───────────────────── Yes ─┐
                    No │                                │
                        ▼                S380           │
    No          IS THERE RESPONSE                       │
    ◄──────────   FROM TAG ?                            │
                    Yes │                               │
                        ▼                S390      S410 │
        CHECK CONTENT OF RESPONSE              TIME OUT │
                        │                          │    │
                        ▼                S400       │    │
    No      IS THE CONTENT OF THE                   │    │
    ◄────── RESPONSE RELEVANT ?                     │    │
                    Yes │◄──────────────────────────┘    │
                        ▼                                │
        CHECK CONTENT OF RESPONSE  ─S420                 │
                        │◄───────────────────────────────┘
                        ▼                S430
    Yes     PERMISSIBLE TIME FOR
    ◄────── ACQUIRING "ADDRESS RESPONSE"
                OVER?
                    No │                S440
                        ▼
    No          END CORRECTLY ?
    ◄──────────
                    Yes │
   S460                 ▼                       S450
ERROR IN        COMPLETE TAG WRITING
PROCESSING      OPERATION
        │               │
        └───────┬───────┘
                ▼
            ( END )
```

# FIG.10

| PREAMBLE | DELIMITER | COMMAND | ID | ADDRESS | DATA | CRC |
|----------|-----------|---------|-----|---------|------|-----|

# FIG.11

| PREAMBLE | RESPONSE | CRC |
|----------|----------|-----|

# FIG.12

COMMUNICABLE AREA 20

COMMUNICABLE AREA FOR ONE ANTENNA(1m)

LAPSE OF TIME(T) →

TAG IDENTIFICATION COMMAND

Write COMMAND

ADDRESS RESPONSE

WRITE RESONSE

TRANSMISSION/ RECEPTION OF VALID DATA

TRANSMISSION/ RECEPTION OF VALID DATA

ANTENNA 2X
ANTENNA 2Y
ANTENNA 2Z

TRANSMISSION OF VALID DATA

COMMUNICATION RANGE 21X

COMMUNICATION RANGE 21Y

COMMUNICATION RANGE 21Z

ANTENNA 2X

ANTENNA 2Y

2Z ANTENNA

EP 1 643 413 A2

# FIG.13

COMMUNICATION
RANGE P2

COMMUNICATION
RANGE Pn

COMMUNICATION
RANGE P1

MOVING
OBJECT

TAG 50

1

ANTENNA 2R

PC

READER/
WRITER 30

5

# FIG.14

READER/WRITER ~30

MPU ~11

TRANSMITTING UNIT ~12

RECEIVING UNIT ~13

CONTROLLING UNIT ~19

ROTATION CONTROLLING UNIT ~31

ANTENNA ~2R

# FIG.15

```
        ┌─────────────┐
        │    START    │
        └──────┬──────┘
               ▼
┌──────────────────────────────┐
│      MOVEMENT OF TAG         │──S500
└──────────────┬───────────────┘
               ▼
┌──────────────────────────────┐
│  ROTATE ANTENNA TO TRACK TAG │──S510
└──────────────┬───────────────┘
               ▼
┌──────────────────────────────┐
│    TRANSMIT COMMANDS TO TAG  │──S520
└──────────────┬───────────────┘
               ▼
┌──────────────────────────────┐
│   RECEIVE COMMANDS FROM TAG  │──S530
└──────────────┬───────────────┘
               ▼
        ┌─────────────┐
        │     END     │
        └─────────────┘
```

# FIG.16

COMMUNICATION RANGE 21A  COMMUNICATION RANGE 21P

TAG TAG TAG TAG TAG TAG TAG TAG

ANTENNA 2A  ANTENNA 2P  1 50 MOVING OBJECT

PC 5  READER/WRITER 42A  READER/WRITER 41

LAN 49

# FIG.17

```
                                                          ┌─41
                                              READER/WRITER
         ┌─11
  ┌──────────────────────────────────────────────────────┐
  │                        MPU                            │
  └──────────────────────────────────────────────────────┘
      ┌─12                        ┌─13
  ┌─────────────────────┐   ┌─────────────────────────┐
  │  TRANSMITTING UNIT   │   │      RECEIVING UNIT      │
  └─────────────────────┘   └─────────────────────────┘
                                ┌─19            ┌─45
                          ┌──────────────┐ ┌──────────────┐
                          │ CONTROLLING  │ │   SEQUENCE    │
                          │    UNIT      │─│  MANAGEMENT   │
                          │              │ │     UNIT      │
                          └──────────────┘ └──────────────┘
                              ┌─2P
                          ┌──────────────┐
                          │   ANTENNA    │
                          └──────────────┘
```

33

# FIG.18

42A

READER/WRITER

11

MPU

12

TRANSMITTING UNIT

13

RECEIVING UNIT

19

CONTROLLING UNIT

47

COMMUNICATION MONITORING UNIT

2A

ANTENNA

# FIG.19

```
                    ┌─────────────┐
                    │    START    │
                    └──────┬──────┘
                           │
                           ▼
            ┌──────────────────────────────┐
            │ START PROCESSING OF READER/   │ ～S600
            │     WRITER(UPSTREAM)          │
            └───────────────┬──────────────┘
                            │
                            ▼
            ┌──────────────────────────────┐
            │ CARRY OUT COLLISION ARBITRATION │ ～S610
            └───────────────┬──────────────┘
                            │
                            ▼
            ┌──────────────────────────────┐
            │   COMPARE WITH CONTENT OF     │ ～S620
            │ APPEAED TAG MONITORING TABLE  │
            └───────────────┬──────────────┘
```

S630 — IS THERE NEW TAG INCLUDED IN CURRENT READING RESULT ?

No / Yes

S640 — ADD ADDRESS OF NEW TAG TO LAST PART OF APPEARED TAG MONITORING TABLE

S650 — IS THERE DISAPPEARED TAG INCLUDED IN RESULT OF CURRENT READING ?

No / Yes

S660 — ADD ADDRESS OF DISAPPEARED TAG TO LAST PART OF SEQUENCE MANAGEMENT TABLE

S670 — INFORM READER/WRITER OF INFORMATION ABOUT SEQUENCE

# FIG.20

TAG CONTROL INFORMATION 90

**BEFORE ALTERATION**

TAG-APPEARANCE MANAGEMENT TABLE 91

| SEQUENCE OF TAG | TAG ADDRESS (8Byte) |
|---|---|
| 1(DOWNSTREAM) | EXXXXXXX |
| 2 | FXXXXXXX |
| 3 | GXXXXXXX |
| 4(UPSTREAM) | HXXXXXXX |

SEQUENCE MANAGEMENT TABLE 92A

| SEQUENCE OF TAG | TAG ADDRESS (8Byte) |
|---|---|
| 1(DOWNSTREAM) | AXXXXXXX |
| 2 | BXXXXXXX |
| 3 | CXXXXXXX |
| 4(UPSTREAM) | DXXXXXXX |

**AFTER ALTERATION**

| SEQUENCE OF TAG | TAG ADDRESS (8Byte) |
|---|---|
| 1(DOWNSTREAM) | FXXXXXXX |
| 2 | GXXXXXXX |
| 3 | HXXXXXXX |
| 4(UPSTREAM) | IXXXXXXX |

| SEQUENCE OF TAG | TAG ADDRESS (8Byte) |
|---|---|
| 1(DOWNSTREAM) | BXXXXXXX |
| 2 | CXXXXXXX |
| 3 | DXXXXXXX |
| 4(UPSTREAM) | EXXXXXXX |

# FIG.21

```
                    ( START )
                        │
    ┌──────────────────▼──────────────────┐
    │  START PROCESSING OF READER/          │  ~S700
    │  WRITER 41(UPSTREAM)                   │
    └──────────────────┬──────────────────┘
                        │
          ┌─────────────▼─────────────┐  S710
   No     │  IS UPDATE                 │
 ◄────────│  INFORMATION ABOUT         │
          │  SEQUENCE MANAGEMENT TABLE │
          │  RECEIVED?                 │
          └─────────────┬─────────────┘
                      Yes
    ┌──────────────────▼──────────────────┐
    │  UPDATE SEQUENCE MANAGEMENT          │  ~S720
    │  TABLE                               │
    └──────────────────┬──────────────────┘
                        │
          ┌─────────────▼─────────────┐  S730
   No     │  IS THERE ANY TAG TO       │
 ◄────────│  WHICH READ/WRITE PROCESSING HAS │
          │  NOT BEEN DONE YET ?       │
          └─────────────┬─────────────┘
                      Yes
    ┌──────────────────▼──────────────────┐
    │  SPECIFY ADDRESS OF THE              │
    │  LOWERMOST TAG TO WHICH READ/        │  ~S740
    │  WRITE OPERATION HAS NOT BEEN        │
    │  COMPLETED YET                       │
    └──────────────────┬──────────────────┘
                        │
    ┌──────────────────▼──────────────────┐
    │  CARRY OUT READ/WRITE                │  ~S750
    │  PROCESSING TO TAG                   │
    └──────────────────┬──────────────────┘
                        │
    ┌──────────────────▼──────────────────┐
    │  DELETE TAG ADDRESS FROM             │  ~S760
    │  SEQUENCE MANAGEMENT TABLE           │
    └──────────────────┬──────────────────┘
                        │
    ┌──────────────────▼──────────────────┐
    │  NOTIFY READER/WRITER OF             │
    │  ADDRESS OF TAG TO WHICH READ/       │  ~S770
    │  WRITE PROCESSING HAS                │
    │  COMPLETED                           │
    └──────────────────┬──────────────────┘
                        │
          ┌─────────────▼─────────────┐  S780
  Yes     │  IS THERE TAG TO           │
 ◄────────│  WHICH READ/WRITE PROCESSING HAS │
          │  NOT BEEN DONE YET ?       │
          └─────────────┬─────────────┘
                       No
```

# FIG.22

COMMUNICATION
RANGE 21A

COMMUNICATION
RANGE 21P

| TAG | TAG | TAG | TAG | TAG | TAG | TAG | TAG |

ANTENNA

ANTENNA

2A

2A

1  50
MOVING
OBJECT

PC ~5

READER/
WRITER ~42A

READER/
WRITER ~41

LAN

49

# FIG.23

COMMUNICATION
RANGE 21B

COMMUNICATION
RANGE 21C

COMMUNICATION
RANGE 21P

| TAG | TAG | TAG | TAG | TAG | TAG | TAG | TAG |

ANTENNA

ANTENNA

ANTENNA

2B

2C

1  50
MOVING
OBJECT
2P

PC ~5

READER/
WRITER

READER/
WRITER ~42C

READER/
WRITER ~41

42B

LAN

49

# FIG.24

```
                    ┌─────────────┐
                    │    START    │
                    └──────┬──────┘
                           │
                           ▼
        ┌────────────────────────────────────┐
        │  START PROCESSING OF READER/        │  ~S800
        │  WRITER 41(UPSTREAM)                │
        └──────────────────┬─────────────────┘
                           ▼
        ┌────────────────────────────────────┐
        │  CARRY OUT COLLISION ARBITRATION    │  ~S810
        └──────────────────┬─────────────────┘
                           ▼
        ┌────────────────────────────────────┐
        │  COMPARE WITH CONTENT OF TAG-       │  ~S820
        │  APPEARANCE MANAGEMENT TABLE        │
        └──────────────────┬─────────────────┘
                           ▼
                    ╱────────────╲               S830
            No     ╱  IS NEW TAG  ╲
         ◄────────◄ INCLUDED IN CURRENT ╲
                   ╲ READING RESULT?  ╱
                    ╲────────────╱
                           │ Yes
                           ▼
        ┌────────────────────────────────────┐
        │  ADD ADDRESS OF NEW TAG TO LAST     │  ~S840
        │  PART OF TAG-APPEARANCE             │
        │  MANAGEMENT TABLE                   │
        └──────────────────┬─────────────────┘
                           ▼
                    ╱────────────╲               S850
            No     ╱  IS THERE ANY ╲
         ◄────────◄ TAG WHICH HAS  ╲
                   ╲ DISAPPEARED ?  ╱
                    ╲────────────╱
                           │ Yes
                           ▼                     S860
                  No  ╱──────────╲
            ◄────────◄  FLAG = 1 ? ╲
                       ╲──────────╱
                           │ Yes               S870
```

ADD ADDRESS OF DISAPPEARED TAG TO LAST PART OF SEQUENCE MANAGEMENT TABLE — S890

ADD ADDRESS OF DISAPPEARED TAG TO LAST PART OF SEQUENCE MANAGEMENT TABLE — S870

INFORM READER/WRITER OF INFORMATION ABOUT SEQUENCE — S900

INFORM READER/WRITER OF INFORMATION ABOUT SEQUENCE — S880

INVERSE FLAG — S910

# FIG.25

COMMUNICATION
RANGE 21E

COMMUNICATION
RANGE 21D

| A1 | B1 | A2 | B2 | A3 | B3 | A4 |
|----|----|----|----|----|----|----|

| TAG | TAG | TAG | TAG | TAG | TAG | TAG | TAG |
|-----|-----|-----|-----|-----|-----|-----|-----|

ANTENNA

ANTENNA

~2E

~2D

1

50
MOVING
OBJECT

5

PC

| READER/
WRITER(FOR
PROCESSING B) | ~41E |

| READER/
WRITER(FOR
PROCESSING A) | ~42D |

LAN

49

# FIG.26

| (T) →TIME AXIS | | T0 | T1 | T2 | T3 | T4 |
|---|---|---|---|---|---|---|
| READER/ WRITER 42D | OBJECT TAG | A1 | B1 | A2 | B2 | A3 |
| | PROCESS OF READER/WRITER | PROCESS | DISREGARD | PROCESS | DISREGARD | PROCESS |
| READER/ WRITER42E | OBJECT TAG | B3 | A4 | B4 | A5 | B5 |
| | PROCESS OF READER/WRITER | PROCESS | DISREGARD | PROCESS | DISREGARD | PROCESS |

EP 1 643 413 A2

# FIG.27